# EUROPEAN PATENT APPLICATION

(11) **EP 2 048 613 A1**
(43) Date of publication of application: **15.04.2009**
(21) Application number: 08253032.0
(22) Date of filing: 15.09.2008
(51) Int. Cl.: G06Q 30/00

(54) **Portable digital content device and methods for use therewith**

(30) Priority: 09.10.2007 US 973871
(71) Applicant: SanDisk Corporation, Milpitas, CA 95035 (US)
(72) Inventor: Webster, Kurt F., Los Gatos, CA 95033 (US); Balma, Phillip J., Salinas, CA 93908-8825 (US); MacDonald, Mairi, San Jose, CA 95112 (US); Barzilai, Ron, Cupertino, CA 95014 (US); Shmuel, Avraham, Kfar-Sirkin 49935 (IL); Carmeli, Ran, Rinatya 73165 (IL); Koren, David, Raanana (IL); Raines, Moshe, Tel Aviv 69544 (IL)
(74) Representative: Hitchcock, Esmond Antony

(57) **Abstract**

A portable digital content device and methods for use therewith are disclosed. In one embodiment, a portable digital content device and method are disclosed for tracking usage activity to support digital asset management in a mobile environment. In another embodiment, an offline/disconnected advertisement inventory management and advertisement decision system and method are disclosed. While these systems and methods can be used with any suitable portable digital content device, an exemplary portable digital content device is disclosed, which can be used for purposes in addition to or instead of implementing the usage activity tracking and advertisement decision system functions. Any of the embodiments described herein can be used alone or in combination.

## Description

### Background

Instead of selling digital content to consumers, a digital content owner can make digital content accessible to consumers for free but sell ad space to advertisers. With such "ad-supported" digital content, one or more advertisements would be played before, during, or after the playback of the digital content. Due to the difficulties of protecting digital content from being illegally copied and transferred, ad-supported digital content is often streamed from a network location directly to the user's playback device, which prevents the user from easily capturing and copying the digital content. While streaming ad-supported digital content provides digital content owners and advertisers with desired control over their assets, streaming requires the playback device to be an online device connected to the content service head end or source. Accordingly, a user is prevented from enjoying the digital content on an offline playback device, such as the user's home television, media-capable phone, personal media player, or MP3 player, which may offer improved user pleasure. Recently, services have been announced that allow ad-supported digital content to be downloaded. However, these services introduce the risk that a user will be able to strip out the advertisements from the downloaded content package and view the digital content without the advertisements. If a content owner cannot assure an advertiser that its advertisement will be viewed, advertisers may be reluctant to buy ad space in downloadable digital content, which limits the content owner's ability to monetizing its digital content.

### Description of the Invention

According to an aspect of the present invention there is provided a method for tracking usage activity using a portable digital content device, the method comprising:
with a portable digital content device:
storing digital content and an advertisement received from a first host device;
playing the digital content and the advertisement on a second host device; and
tracking usage activity of the advertisement.

The method preferably further comprises reporting the usage activity to an entity external to the portable digital content device. The method may further comprise tracking usage activity of the digital content. The digital content may be encrypted. A key to decrypt the digital content can be stored in a hidden area of a memory in the portable digital content device. The usage activity may be stored in a hidden area of a memory in the portable digital content device.

The digital content and the advertisement can be part of a single file. An ingestion service may combine the digital content and the advertisement in the single file. The single file can comprise a marker indicating a location of the advertisement. The portable digital content device preferably further stores a metadata file indicating a location of the advertisement in the single file.

The digital content and the advertisement can be separate files. In this case the portable digital content device assembles the digital content and the advertisement according to data in a playlist associated with digital content.

The digital content may be received from a content delivery network. The method may further comprise decoding the digital content and the advertisement with the portable digital content device. The method may further comprise receiving and storing an updated advertisement with the portable digital content device. The portable digital content device may comprise a memory card.

According to another aspect of the present invention there is provided a method for tracking usage activity using a portable digital content device, the method comprising:
with a portable digital content device:
   storing digital content and an advertisement received from a network in communication with the portable digital content device through a first host device;
   playing the digital content and the advertisement on a second host device not in communication with the network;
   tracking usage activity of the advertisement while the portable digital content device is not in communication with the network; and
   reporting the usage activity to an entity external to the portable digital content device when the portable digital content device is placed back in communication with the network.

The portable digital content device may comprise a memory card. The digital content is preferably encrypted, wherein the method further comprises storing a key to decrypt the encrypted digital content, wherein the key is received from the network via a secure channel provided through the first host device. The method may further comprise decoding the digital content and the advertisement with the portable digital content device. The method may further comprise receiving and storing an updated advertisement with the portable digital content device when the portable digital content device is placed back in communication with the network. The method preferably further comprises tracking usage activity of the digital content.

According to another aspect of the present invention there is provided a method for tracking usage activity using a portable digital content device, the method comprising:
with a portable digital content device:
   storing encrypted digital content received from a network via an un-secured channel provided through a first host device;
   storing a key to decrypt the encrypted digital content in a hidden area of a memory of the portable digital content device, wherein the key is received from the network via a secure channel provided through the first host device;
   storing an advertisement received from the network through the first host device;
   receiving a request to play the digital content when the portable digital content device is in communication with a second host device not in communication with the network;
   decrypting the digital content with the key;
   decoding the digital content and the advertisement;
   playing the digital content and the advertisement on the second host device;
   tracking usage activity of the advertisement while the portable digital content device is not in communication with the network; and
   reporting the usage activity to an entity external to the portable digital content device when the portable digital content device is placed back in communication with the network.

The method preferably stores the usage activity data in a hidden area of the memory in the portable digital content device. The digital content and the advertisement can be part of a single file. The digital content and the advertisement can be separate files. In this case the portable digital content device assembles the digital content and the advertisement according to data in a playlist associated with digital content.

According to another aspect of the present invention there is provided a portable digital content device comprising:
a memory; and
circuitry operative to:
   store, in the memory, digital content and an advertisement received from a first host device;
   play the digital content and the advertisement on a second host device; and
   track usage activity of the advertisement.

The circuitry may further be operative to report the usage activity to an entity external to the portable digital content device. The circuitry may further be operative to track usage activity of the digital content. The digital content may be encrypted. A key to decrypt the digital content can be stored in a hidden area of the memory. The usage activity may be stored in a hidden area of the memory. The digital content and the advertisement can be part of a single file. The digital content and the advertisement may be combined in the single file by an ingestion service. The single file may comprise a marker indicating a location of the advertisement. The memory preferably stores a metadata file indicating a location of the advertisement in the single file.

The digital content and the advertisement may be separate files, and wherein the circuitry is further operative to assemble the digital content and the advertisement according to data in a playlist associated with digital content.

The digital content may be received from a content delivery network. The circuitry may further be operative to decode the digital content and the advertisement. The circuitry may further be operative to receive and store an updated advertisement. The portable digital content device may comprises a memory card.

According to another aspect of the present invention there is provided a portable digital content device comprising:
a memory; and
circuitry operative to:
   store, in the memory, digital content and an advertisement received from a network in communication with the portable digital content device through a first host device;
   play the digital content and the advertisement on a second host device not in communication with the network;
   track usage activity of the advertisement while the portable digital content device is not in communication with the network; and
   report the usage activity to an entity external to the portable digital content device when the portable digital content device is placed back in communication with the network.

The portable digital content device may comprises a memory card. The digital content may be encrypted. In this case the circuitry can further be operative to store a key to decrypt the encrypted primary digital content, wherein the key is received from the network via a secure channel provided through the first host device. The circuitry may further be operative to decode the digital content and the advertisement. The circuitry may further be operative to receive and store an updated advertisement when the portable digital content device is placed back in communication with the network. The circuitry may further be operative to track usage activity of the digital content.

According to another aspect of the present invention there is provided a portable digital content device comprising:
a memory; and
circuitry operative to:
   store, in the memory, encrypted digital content received from a network via an un-secured channel provided through a first host device;
   store, in the memory, a key to decrypt the encrypted digital content in a hidden area of the memory, wherein the key is received from the network via a secure channel provided through the first host device;
   store, in the memory, an advertisement received from the network through the first host device;
   receive a request to play the digital content when the portable digital content device is in communication with a second host device not in communication with the network;
   decrypt the digital content with the key;
   decode the digital content and the advertisement;
   play the digital content and the advertisement on the second host device;
   track usage activity of the advertisement while the portable digital content device is not in communication with the network; and
   report the usage activity to an entity external to the portable digital content device when the portable digital content device is placed back in communication with the network.

The usage activity data may be stored in a hidden area of the memory. The digital content and the advertisement may be part of a single file.

The digital content and the advertisement may be separate files. In this case the circuitry is further operative to assemble the digital content and the advertisement according to data in a playlist associated with digital content.

According to another aspect of the present invention there is provided a method for providing an advertisement decision system, the method comprising:
with a portable digital content device storing digital content, a plurality of advertisements, and a set of rules:
   (a) receiving a request from a player in a host device in communication with the portable digital content device to play the digital content;
   (b) using the set of rules, determining a set of advertisements from the plurality of advertisements to play with the digital content; and
   (c) playing the digital content with the set of advertisements determined in (b).

The portable digital content device may comprise a memory card. The set of rules may be optimized for use on a processor of the memory card. The set of rules may comprise a plurality of rules organized as a binary tree. The portable digital content device may further store a playlist that associates the digital content with the set of rules. The plurality of advertisements may comprise a first advertisement pool and a second advertisement pool, wherein the set of rules specifies advertisements from both the first and second advertisement pools. The set of rules may be a result of a merger of first and second set of rules. The portable digital content device may further store a playlist associated with the digital content, wherein the playlist identifies at least one location in the digital content for placement of an advertisement. The set of rules may comprise a result based on at least one of the following: location in the digital content available for an advertisement, time, demographic information about a user, history of played advertisements, to-be-played advertisements, and type of host device used for playback. The portable digital content device may comprise a video decoder but is free of a display device.

The method may further comprise providing the player to the host device with the portable digital content device. The method may further comprise providing, with the portable digital content device and to the host device, a software application operative to download the digital content from a network.

According to another aspect of the present invention there is provided a method for providing an advertisement decision system, the method comprising:
with a portable digital content device storing digital content, a plurality of advertisements, and a set of rules, wherein the set of rules is merged from a first set of rules associated with a first advertisement pool and a second set of rules associated with a second advertisement pool:
   (a) receiving a request to play the digital content;
   (b) using the set of rules, determining a set of advertisements from the plurality of advertisements to play with the digital content; and
   (c) playing the digital content with the set of advertisements determined in (b).

The portable digital content device may comprise a memory card. The set of rules may be optimized for use on a processor of the memory card. The set of rules may comprise a plurality of rules organized as a binary tree. The portable digital content device may comprise a video decoder but is free of a display device.

The method may comprise providing a player to a host device with the portable digital content device. The method may further comprise providing, with the portable digital content device and to a host device, a software application operative to download the digital content from a network.

According to another aspect of the present invention there is provided a method for providing an advertisement decision system, the method comprising:
with a portable digital content device storing digital content, a plurality of advertisements, and a set of rules:
   (a) receiving a request from a player in the portable digital content device to play the digital content;
   (b) using the set of rules, determining a set of advertisements from the plurality of advertisements to play with the digital content; and
   (c) playing the digital content with the set of advertisements determined in (b), wherein the portable digital content device comprises a video decoder but is free of a display device, and wherein the digital content and set of advertisements determined in (b) are played on a display device in communication with the portable digital content device.

The portable digital content device may comprise a memory card. The set of rules may be optimized for use on a processor of the memory card. The set of rules may comprise a plurality of rules organized as a binary tree. The set of rules may be a result of a merger of first and second set of rules. The portable digital content device may further store a playlist associated with the digital content, wherein the playlist identifies at least one location in the digital content for placement of an advertisement.

According to another aspect of the present invention there is provided a portable digital content device comprising:
a memory; and
circuitry opertive to:
   receive a request from a player in a host device in communication with the portable digital content device to play digital content stored in the memory;
   using a set of rules stored in the memory, determine a set of advertisements from a plurality of advertisements stored in the memory to play with the digital content; and
   play the digital content with the determined set of advertisements.

The portable digital content device may comprise a memory card. The set of rules can be optimized for use on a processor of the memory card. The set of rules may comprise a plurality of rules organized as a binary tree. The memory may further store a playlist that associates the digital content with the set of rules.

The plurality of advertisements may comprise a first advertisement pool and a second advertisement pool, wherein the set of rules specifies advertisements from both the first and second advertisement pools.

The set of rules may be a result of a merger of first and second set of rules. The memory may further store a playlist associated with the digital content, wherein the playlist identifies at least one location in the digital content for placement of an advertisement. The set of rules may comprise a result based on at least one of the following: location in the digital content available for an advertisement, time, demographic information about a user, history of played advertisements, to-be-played advertisements, and type of host device used for playback.

The portable digital content device may further comprise a video decoder but wherein the portable digital content device is free of a display device. The circuitry may further be operative to provide the player to the host device. The circuitry may further be operative to provide, to the host device, a software application operative to download the digital content from a network.

According to another aspect of the present invention there is provided a portable digital content device comprising:
a memory; and
circuitry operative to:
   receive a request to play digital content stored in the memory;
   using a set of rules stored in the memory, determine a set of advertisements from a plurality of advertisements stored in the memory to play with the digital content, wherein the set of rules is merged from a first set of rules associated with a first advertisement pool and a second set of rules associated with a second advertisement pool; and
   play the digital content with the determined set of advertisements.

The portable digital content device may comprise a memory card. The set of rules may be optimized for use on a processor of the memory card. The set of rules may comprise a plurality of rules organized as a binary tree. The portable digital content device may further comprise a video decoder, wherein the portable digital content device is free of a display device. The circuitry may further be operative to provide a player to a host device. The circuitry may further be operative to provide, to a host device, a software application operative to download the digital content from a network.

According to another aspect of the present invention there is provided a portable digital content device comprising:
a memory; and
circuitry operative to:
   receive a request from a player in the portable digital content device to play digital content stored in the memory;
   using a set of rules stored in the memory, determine a set of advertisements from a plurality of advertisements stored in the memory to play with the digital content; and
   play the digital content with the determined set of advertisements;
wherein the portable digital content device further comprises a video decoder but is free of a display device, and wherein the digital content and determined set of advertisements are played on a display device in communication with the portable digital content device.

The portable digital content device may comprise a memory card. The set of rules may be optimized for use on a processor of the memory card. The set of rules may be comprise a plurality of rules organized as a binary tree. The set of rules may be a result of a merger of first and second set of rules. The memory may further store a playlist associated with the digital content, wherein the playlist identifies at least one location in the digital content for placement of an advertisement.

According to another aspect of the present invention there is provided a portable digital content device comprising:
a port;
a memory;
a video decoder; and
a controller in communication with the port, the memory, and the video decoder, wherein the controller is operative to authenticate an entity requesting access to the memory and authorize an authenticated entity to perform actions according to a set of permissions associated with the entity.

The memory may comprise a public area and a hidden area, wherein the controller is operative to enforce read and write access permission to the hidden area. The controller may be operative to store encrypted content in the public area of the memory and to store a key for decrypting the encrypted content in the hidden area of the memory.

The controller may be operative to:
in response to a request to play a file:
   determine if a file header of the file comprises a content encryption key name;
   if the file header of the file does not comprise a content encryption key name, stream contents of the file to the video decoder; and
   if the file header of the file does comprise a content encryption key name, decrypt the file and stream the contents of the file to the video decoder.

The port may comprises a USB port. The memory may comprise Flash memory. The portable digital content device may comprise a wireless receiver in communication with the controller. The port may comprise a USB port, wherein the memory comprises Flash memory, and wherein the portable digital content device further comprises a wireless receiver in communication with the controller.

According to another aspect of the present invention there is provided a portable digital content device assembly comprising:
a main module comprising:
   a memory;
   an electrical connector configured to mate with a mating electrical connector on a host device;
   a wireless receiver; and
   circuitry in communication with the memory, electrical connector and wireless receiver, wherein the circuitry is operative to perform read and write operations to the memory in response to commands received from the electrical connector and the wireless receiver; and
a remote control comprising:
   a wireless transmitter; and
   circuitry in communication with the wireless transmitter and operative to transmit a command to the wireless receiver of the main module;
wherein the main module and the remote control are configured such that the main mode and the remote control can slide into one another to form a portable assembly.

The remote control may comprise an opening sized to accept the electrical connector when the main module and remote control slide into one another. One of the main module and the remote control may comprise a protrusion, wherein the other of the main module and the remote control comprises a recess, and wherein the protrusion fits into the recess to retain the main module and remote control in place after the main module and remote control slide into one another.

The remote control may comprise a play button that is exposed even after the main module and remote control slide into one another. The play button may comprise a depressible play button, and wherein the play button cannot be depressed after the main module and remote control slide into one another. The remote control may comprises an opening sized to accept the electrical connector when the main module and remote control slide into one another, wherein the depressible play button is positioned over the opening, and wherein the presence of the electrical connector in the opening prevents the play button from being depressed. The remote may comprise a plurality of user input elements, wherein the plurality of user input elements are covered by the main module after the main module and the remote control slide into one another. The remote control may comprise a plurality of rails, wherein the main module comprises a plurality of grooves, wherein the plurality of rails slide along the plurality of grooves when the main module and the remote control slide into one another.

According to another aspect of the present invention there is provided a cradle for use with a portable digital content device, the cradle comprising:
a main body comprising an electrical connector configured to mate with a mating electrical connector on a portable digital content device;
a leg comprising an opening; and
a cable configured to place the electrical connector in communication with a host device, wherein the cable passes through the opening in the leg;
wherein the leg is rotatable about an axis passing through the opening.

The leg may be rotatable 360 degrees about an axis passing through the opening. The cradle may further comprise a plurality of rails configured to slide along a plurality of grooves in the portable digital content device when the portable digital content device slides into the cradle. The electrical connector may comprise a USB port. The cable may be configured to place the electrical connector in communication with a television. One of the cradle and the portable digital content device may comprise a protrusion, wherein the other of the cradle and the portable digital content device comprises a recess, and wherein the protrusion fits into the recess to retain the cradle and portable digital content device in place after the cradle and portable digital content device slide into one another.

### Brief Description of the Drawings

Figures 1A, 1B, and 1C are diagrammatic illustrations of an embodiment for tracking usage activity to support digital asset management in a mobile environment.

Figure 2 is an illustration of a digital content delivery system of an embodiment.

Figure 3 is an illustration showing delivery of encrypted content and a key to a portable digital content device of an embodiment.

Figure 4 is an illustration of public and private partitions of a memory in a portable digital content device of an embodiment.

Figure 5 is an illustration of public and private partitions of a memory in a portable digital content device of an embodiment.

Figure 6 is an illustration of public and private partitions of a memory in a portable digital content device of an embodiment.

Figure 7 is an illustration of a public partition of a memory in a portable digital content device of an embodiment.

Figure 8 is a "strata view" of a system that will be used to illustrate an advertisement delivery system of an embodiment.

Figure 9 is an illustration of various data sinks and data sources in communication with a portable digital content device of an embodiment.

Figure 10 is an illustration of a playlist structure of an embodiment.

Figure 11 is diagram illustrating advertisement placement in an embodiment.

Figure 12 is a diagram illustrating tracking of usage activity of an embodiment.

Figure 13 is a block diagram of a portable digital content device of an embodiment.

Figures 14A and 14B are flowcharts illustrating a method of an embodiment for playback of digital content.

Figure 15 is an illustration of a portable digital content device and remote control of an embodiment.

Figure 16 is an end view of a remote control of an embodiment.

Figure 17 is an illustration of a portable digital content device/remote control assembly of an embodiment.

Figure 18 is an illustration of a portable digital content device and a cradle of an embodiment.

Figure 19 is an end view of a cradle of an embodiment.

Figure 20 is an illustration of a portable digital content device/cradle assembly of an embodiment.

### Detailed Description of the Presently Preferred Embodiments

**Introduction**

By way of introduction, the embodiments described below generally relate to a portable digital content device and methods for use therewith. In one embodiment, a portable digital content device and method are disclosed for tracking usage activity to support digital asset management in a mobile environment. In another embodiment, an offline/disconnected advertisement inventory management and advertisement decision system and method are disclosed. While these systems and methods can be used with any suitable portable digital content device, an exemplary portable digital content device is disclosed. Any of the embodiments described herein can be used alone or in combination. Accordingly, the usage activity tracking methods do not necessarily need to be used with the exemplary portable digital content device or with the advertisement decision system, and the exemplary portable digital content device does not necessarily needed to be used with the usage activity tracking methods or with the advertisement decision system. Further, the examples set forth below are merely used to illustrate these embodiments and are not intended as a limitation on the claims.

**Embodiments Relating to Tracking Usage Activity to Support Digital Asset Management in a Mobile Environment**

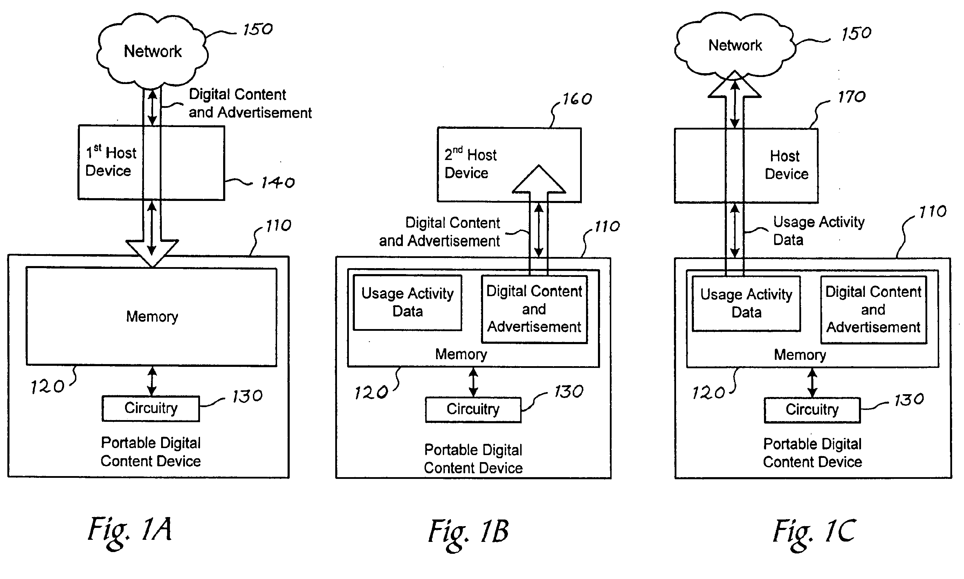

Turning now to the drawings, Figures 1A, 1B, and 1C are illustrations of an embodiment for tracking usage activity to support digital asset management in a mobile environment. These figures show a portable digital content device 110. As used herein, a "portable digital content device" is a portable device (i.e., a device that is easily movable from one location to another) that comprises a memory 120 and the circuitry 130 operative, in this embodiment, to track usage activity of certain data stored in the memory 120. It should be understood that the portable digital content device 110 can take any suitable form and can comprise components other than just the memory 120 and the circuitry 130. For example, the portable digital content device 110 can be as simple as a memory card that comprises just the memory 120 and circuitry 130 (and perhaps other ancillary circuitry), such as when the portable digital content device 110 takes the form of a MicroSD™ or other small memory card. The portable digital content device 110 can instead be a more-complex device with other components, such as a player, a display device, and/or an audio output jack/speaker (e.g., when the portable digital content device 110 is a mobile phone, a laptop computer, etc.). Depending on its configuration, a portable digital content device 10 can have the functionality not only to store digital content but also to play digital content.

The memory 120 in the portable digital content device 110 can take any suitable form and, in one embodiment, is a non-volatile solid-state memory array (e.g., Flash memory). It should be noted that other types of memory can be used, such as, but not limited to, optical or magnetic media. While the memory 120 is shown as a single component in Figure 1A, it should be understood that several separate memory components can be used. Also, as used herein, "circuitry" (or "circuit") can include one or more components and be a pure hardware implementation and/or a combined hardware/software (or firmware) implementation. Accordingly, "circuitry" can take the form of one or more of a microprocessor or processor and a computer-readable medium that stores computer-readable program code (e.g., software or firmware) executable by the (micro)processor, logic gates, switches, an application specific integrated circuit (ASIC), a programmable logic controller, and an embedded microcontroller, for example. As mentioned above, the circuitry 130 in this embodiment is operative to track usage activity of certain data stored in the memory 120. The circuitry 130 can also be operative to perform other functions, such as the basic operation of the portable digital content device 110 or other advanced functions, as will be described in more detail below. As also mentioned above, the circuitry 130 can comprise one or more components. For example, in an embodiment described in more detail below, the circuitry 130 comprises a controller and a video decoder.

Turning now to Figure 1A, the portable digital content device 110 is shown in communication with a first host device 140, which is in communication with a network 150, such as the Internet. As used herein, the phrase "in communication with" means directly in communication with (e.g., through a wired or wireless connection) or indirectly in communication with through one or more components, which may or may not be shown or described herein. In one embodiment, the portable digital content device 110 and first host device 140 have mating ports (or the first host device 140 can have an adaptor or reader with the mating port). As used herein, a "host device" refers to any device that can be put in communication with the portable digital content device 110 and be used to store data on the portable digital content device 110 and/or play data on the portable digital content device 110. Examples of a host device include, but are not limited to, a digital media player, a personal computer, a display device (e.g., a television), a set-top box, a home or car stereo, etc. As mentioned above, in some situations, a host device can use an adaptor (e.g., a cradle) to be placed in communication with the portable digital content device 110. Different types of host devices can have different functionality. For example, a computer can load digital content onto the portable digital content device 110, whereas a television may only be able to display played digital content. A host device may or may not contain the functionality needed to decode and play the digital content stored in the portable digital content device. As will be described in more detail below, in one presently preferred embodiment, the circuitry 130 in the portable digital content device 110 comprises a video decoder to provide analog video and/or audio output to a host device.

In operation, a user uses the first host device 140 to download digital content and store it in the memory 120 of the portable digital content device 110. (As described in more detail below, the circuitry 130 can be used in the process of storing digital content and other data in the memory 120.) For example, in one embodiment, a general Web browser or specialized client application running on the first host device 140 presents a graphical user interface to the user, through which the user can select digital content to be downloaded to the portable digital content device 110. One such suitable service is Fanfare from SanDisk Corporation.

In the embodiment shown in Figure 1A, the source of the digital content is somewhere in the network 150. In other embodiments, the source of the digital content can be the first host device 140 itself, as when the first host device 140 takes the form of a digital content kiosk, for example. Accordingly, the phrase "receiving digital content from a host device," as used herein, is intended to cover situations including those in which (i) the digital content is stored on the host device and sent to the portable digital content device and (ii) the digital content is stored on a device in communication with the host device (e.g., via a network, such as the Internet), and the digital content is sent through the host device (in a secure or un-secure manner) to the portable digital content device. Also, while the user makes a request for digital content using the first host device 140 in this embodiment, in other embodiments, the user can make the request using user input elements on the portable digital content device 110.

Digital content can take any suitable form, such as, but not limited to, video (with or without accompanying audio) (e.g., a movie, an episode of a TV show, a news program, etc.), audio (e.g., a song, a podcast, one or a series of sounds, etc.), still or moving images (e.g., a photograph, a computer-generated display, etc.), text (with or without graphics) (e.g., an article, a text file, etc.), and a hybrid multi-media presentation of two or more of these forms. Digital content can be passive or require interaction by a user. In this embodiment, the digital content is "ad-supported digital content," meaning that one or more advertisements are associated with the digital content and are intended to be played before, during, and/or after the digital content is played. In the embodiment shown in Figure 1A, a single advertisement is shown (although more than one advertisement can be used), and the advertisement is downloaded along with the digital content. As will be described in more detail below, the advertisement can come from the same or different location as the digital content and can be downloaded at the same or different time as the digital content. In addition to offering ad-supported digital content, the service can also offer paid digital content to the user.

As used herein, an "advertisement" is digital content designed to attract attention or patronage. An advertisement can take the same or different form as its associated digital content. For example, if the digital content is a video, the advertisement can also be a video or can be audio or text. An "advertisement" can be, but does not need to be, directed to a product or service. For example, an "advertisement" can be a commercial for a product or service, a public service announcement, a station or channel identification spot, or an identification of an owner of the digital content. In some forms, an "advertisement" is easily recognizable as a traditional advertisement (e.g., a commercial for a product or service). In other forms, an "advertisement" may not be as easily recognizable. For example, if the digital content of interest is a song of a well-known artist, the "advertisement" can be a song of a lesser-known artist. Even if the song of the lesser-known artist is presented by itself (e.g., without a voice-over encouraging the user to download the song), the song of the lesser-known artist that is presented to the user attracts attention to the lesser-known artist. Also, in some situations, the digital content is the "primary" digital content (or the "supported digital content") in the sense that it is the content of interest to the user (e.g., an episode of a TV show), and the advertisement is "supplemental" digital content (or the "supporting digital content"). However, in some situations, the advertisement can be of more interest to a user than the "primary" content. For example, if the advertisement is a limited-release "preview" of an upcoming movie, the user may be more interested in watching the advertisement than the primary content that it is associated with.

After the digital content and advertisement are downloaded into the memory 120 of the portable digital content device 110, the user removes the portable digital content device 110 from the first host device 140. Accordingly, the portable digital content device 110 is now "offline." As shown in Figure 1B, the user can then place the portable digital content device 110 in communication with a second host device 160 to play the digital content and advertisement. In contrast to systems in which ad-supported digital content is streamed to a user's PC, this embodiment allows the user to play the digital content on a different host device and does not require that different host device to be online. Accordingly, the user can choose where he would like to playback the digital content to maximize his enjoyment of that content.

While the second host device 160 can be the same type of device as the first host device 140 (e.g., both host devices 140, 160 can be personal computers), the second host device 160 can be a different type of host device. For example, the first host device 140 can be a personal computer through which a user downloads ad-supported digital content onto his portable digital content device 110, and the second host device 160 can be the user's home television or portable media player (as mentioned above, the second host device 160 can have an adaptor or cradle to place the portable digital content device 110 in communication with the second host device 160). Further, while the second host device 160 is shown as being offline in Figure 1B, the second host device 160 can also be an online device (e.g., a cell phone).

After the portable digital content device 110 is placed in communication with the second host device 160, the digital content and the advertisement can be played on the second host device 160. The form of the playback operation can depend on the form of the digital content. For example, if the digital content is a video file or an audio file, playback of the digital content can be playing the video (e.g., an episode of a television show) or the audio (e.g., a song). As another example, if the digital content is an image file or a text file, playback of the digital content can be displaying the image or text. As yet another example, if the digital content is an interactive form/survey, playback of the digital content can be presenting the interactive form/survey to the user.

As will be described in more detail below, in some embodiments, the circuitry 130 in the portable digital content device 110 is further operative to decrypt and/or decode the digital content and/or advertisement to provide an analog video and/or audio output to the second host device 160. In this way, the second host device 160 acts merely as a display device for the played digital content and advertisement. In other embodiments, the playback functionally is provided in the second host device 160, and, in yet other embodiments, the playback functionally is distributed between the portable digital content device 110 and the second host device 160. In any of these implementations, the request to play the digital content can be made via a user input element on the portable digital content device 110 (or a remote control in communication with the portable digital content device 110) or via the second host device 160. Further, playback can automatically occur when the portable digital content device 110 is connected to the second host device 160.

Because the digital content is ad-supported, at least one advertisement is played before, during, or after the digital content. As mentioned in the background section above, because a downloaded content package is in the possession of a user, there is a risk that the user will strip out advertisements from the downloaded content package and view the digital content without the advertisements. This may make advertisers reluctant to buy ad space in downloadable digital content, which would limit the content owner's ability to monetizing its digital content. In this embodiment, to help assure an advertiser that its advertisement will be viewed, the circuitry 130 in the portable digital content device 110 is operative to track usage activity of the advertisement, which can be later reported back to the content owner, advertiser, or other entity to prove that the advertisement is being watched and, optionally, to provide other information. As shown in Figure 1B, the tracked usage activity data is stored in the memory 120 of the portable digital content device 110. As also shown in Figure 1B, the tracking of the usage activity of the advertisement is taking place while the portable digital content device 110 is being used in an offline environment. Accordingly, usage activity tracking does not require a connection to the Internet or other type of network.

As used herein, the term "usage activity" refers to any activity relating to the asset being tracked. Usage activity can include, for example, whether an asset was played (either partially or in its entirety), the number of times the asset was played (i.e., the "play count" of the advertisement), the amount of time spent playing an asset, whether the asset was skipped in its entirety, whether and how many times the asset was replayed, whether a fast forward or rewind operation was used during the playback of the asset, user rating of the asset, the time the asset was played, information about the user who consumed the asset, information on the host device used to consume the asset, any survey information that may have been requested and answered, etc. In this particular embodiment, the asset whose activity is being tracked is the advertisement. However, it should be noted that the usage activity of the digital content or other assets in the portable digital content device 110 can also be tracked.

As shown in Figure 1C, the user later connects the portable digital content device 110 to an online host device 170 connected to the network 150, for example to download additional digital content from the service. The online host device 170 can be the same host device that the user used to download the digital content (i.e., the first host device 140) or a different online host device. When the portable digital content device 110 is connected to the online host device 170, the stored usage activity data can be reported to an entity external to the portable digital content device 110 (here, to the host device 170 or to an entity in the network 150, such as a reporting server database, via the host device 170). For example, in one embodiment, the usage activity data is retrieved by a client application in the host device 170 when the host device 170 is placed in communication with the portable digital content device 110 and then sent to a reporting server in the network 150. The reporting server can analyze the usage activity data to verify that the user indeed viewed the advertisement, as well as to conduct various analyses and reports based on the collected data. This information can be useful, for example, to determine the effectiveness of various advertisements, as well as provide information on who, where, and when the advertisement (or other asset) was played.

In addition to reporting usage activity data, the portable digital content device 110 can take advantage of being connected to the network 150 to update the stored advertisement. Some advertisements may become old and outdated. For example, an advertisement downloaded with a TV show in September may no longer be timely in December. Accordingly, a replacement advertisement can be downloaded. Also, additional advertisements may be downloaded, as well as new or changed rules of an advertisement delivery system running on the portable digital content device 110, as will be described in more detail below. The portable digital content device 110 can also download changes in the sequence or features of the main digital content (e.g., adding a new ending to a movie). Further, as mentioned above, the user can download additional digital content when he places the portable digital content device 110 in communication with the host device 170.

In Figure 1C, the host device 170 used to report the usage activity data was different from the host device 160 used to play the digital content and advertisement. However, if the second host device 160 is an online device or is an offline device that is later connected to the network 150, the second host device 160 can report the usage activity data (so, host device 170 would not be needed for that task). Further, if the portable digital content device 110 comprises a component to connect itself to the network 150 (e.g., a wireless transmitter), the portable digital content device 110 can send the usage activity data directed to the network 150 without being in communication with a host device.

As mentioned above, the circuitry 130 in the portable digital content device 110 is operative to track usage activity of an advertisement. This provides advantages over systems in which usage activity tracking of the advertisement is performed by the host device. Consider, for example, the situation in which the portable digital content device takes the form of a memory card. Because circuitry in the memory card is responsible for tracking usage activity of the advertisement, the usage activity of the advertisement will be tracked irrespective of what host device is being used. In contrast, with system in which usage activity tracking is performed by the host device, the usage activity of the advertisement will only be tracked if the host device comprises the necessary player application (or other software). So, if the memory card is connected to a host device with the appropriate player application, the usage activity of the advertisement will be tracked. However, if the memory card is connected to a host device that does not have appropriate player application, the usage activity of the advertisement will not be tracked (the absence of the appropriate player application may even prevent the digital content and/or advertisement from being played at all). Accordingly, by equipping the portable digital content device with circuitry operative to track usage activity of an advertisement, the usage activity of the advertisement will be tracked irrespective of the type of host device and irrespective of whether the host device has the needed player application (i.e., the usage activity tracking functionality is host device and player "agnostic"). This makes the content on the portable digital content device much more portable since the usage activity tracking is tied to the portable digital content device and not to a particular host device or player application. This is especially desirable in today's media environment where users are becoming increasingly frustrated with the inflexibility associated with closed systems.

With the general operation of this embodiment now described, the following paragraphs and drawings illustrate various specific implementations. By way of overview, these various implementations relate to encryption, security mechanism of the memory, and relationships between the digital content and the advertisement(s). It is important to note that these various implementations are being presented merely to illustrate this embodiment, and details of these various implementations should not be read into the claims unless explicitly recited therein.

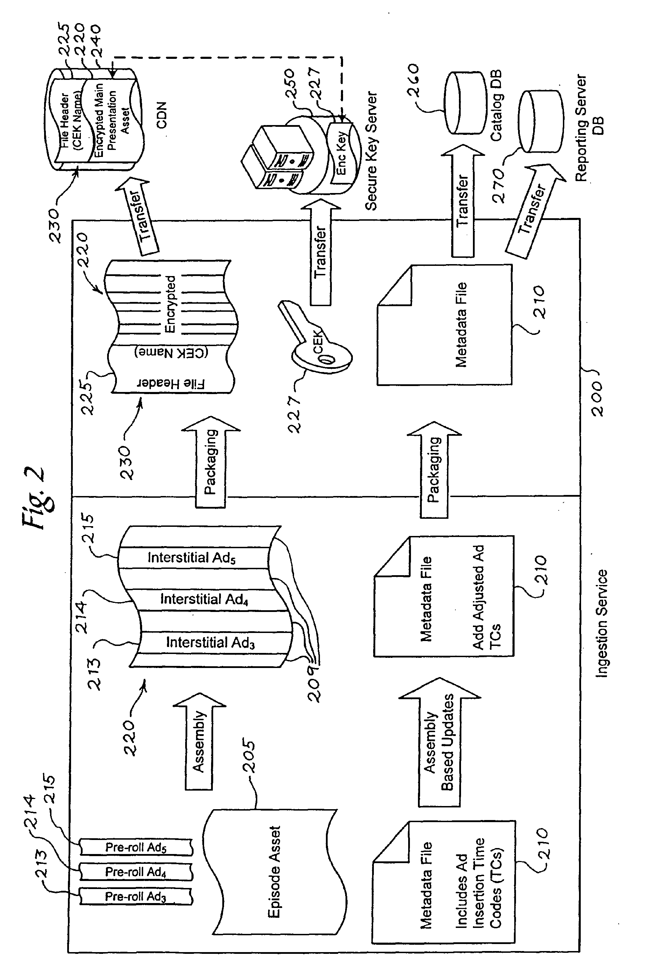

Returning to the drawings, Figure 2 is an illustration of a digital content delivery system of an embodiment. In this embodiment, an ingestion service 200 assembles (or "stitches") the digital content and advertisement(s) together as a single file. In this way, the digital content and advertisement(s) are sent together as a single file to a portable digital content device. In other embodiments, which will be described below, the digital content and advertisement(s) are separate components that are assembled by the portable digital content device according to a playlist or an advertisement delivery system.

In Figure 2, the digital content is an episode of a television show (episode asset 205), and an associated metadata file 210 contains ad insertion time codes (TCs), which indicate the temporal locations in the episode asset 205 that are available for advertisement placement ("ad avails"). In this example, the episode asset 205 contains three ad avails, and there are three advertisements 213, 214, 215 to be inserted into the episode asset 205 according to specified ad insertion rules. The ingestion service 200 assembles the three advertisements 213, 214, 215 into the episode asset 205 to create a single file, which will be referred to herein as the "main presentation asset" 220. (Here, the three advertisements 213, 214, 215 are designated as "pre-roll ads" (advertisements to be played before the digital content) before assembly into the episode asset 205 and designated as "interstitial ads" (advertisements to be played during the digital content) after assembly into the episode asset 205.) The ingestion service 200 also updates the ad time codes in the metadata file 210 to reflect where the advertisements 213, 214, 215 start and stop, as the insertion of the advertisements 213, 214, 215 into the episode content 205 makes the previous time codes out of date.

The ingestion service 200 then packages the main presentation asset and the metadata file 210 for publication. In this embodiment, the packaging of the main presentation asset 220 comprises encrypting the main presentation asset 220 and adding a file header 225 specifying a content encryption key ("CEK") 227 needed to decrypt the encrypted main presentation asset 220. The file 230 containing the header 225 and encrypted main presentation asset 220 is then published on a content delivery network ("CDN") 240. (Although the CDN 240 is shown as a single component in Figure 2, the CDN 240 can comprise a plurality of servers throughout a large geographic location, each containing a copy of the file 230, to allow quick downloading of the file 230 by end users). The ingestion service 200 also publishes the CEK 227 on a secure key server 250 and publishes the metadata file 210 in a catalog database 260 and a reporting server database 270. (Because of the sensitive nature of these items, it may be preferred to transfer the CEK 227 and the metadata file 210 through a secure session.) The catalog database 260 is used by the service providing the content to facilitate user selection and downloading of the content. The reporting server database 270 is the entity to which the portable digital content device reports usage tracking activity of an advertisement (and, optionally, other assets). If the usage activity data sent by a portable digital content device specifies usage activity in terms of time code location, the metadata file in the reporting server database 270 can be used to translate the reported time code locations into data about which advertisements were "used." (Instead of using the metadata file, a digital content file can comprise a marker (e.g., a black screen) to indicate the start/stop of an advertisement, and such a marker can be used in the asset activity tracking operation.)

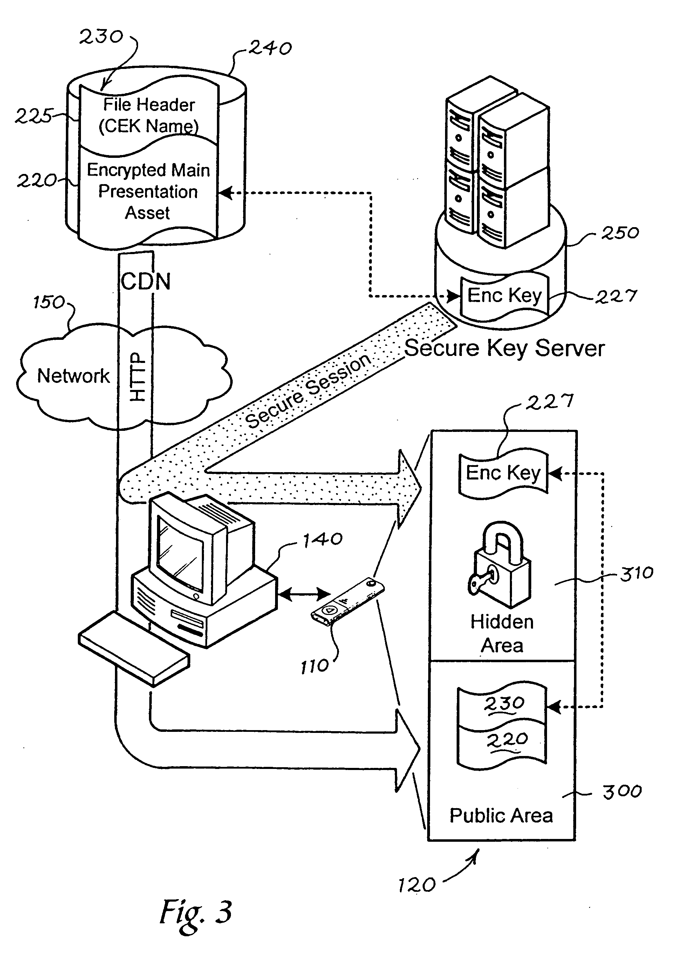

Figure 3 is a more detailed illustration of Figure 1A, which will be used to illustrate a preferred delivery mechanism of an embodiment. As mentioned above, in this embodiment, a user places his portable digital content device 110 in communication with the first host device 140 (here, a PC) and uses a general Web browser or specialized client application running on the first host device 140 to select digital content to be downloaded from a content delivery network 240. Because the main presentation asset 220 is encrypted, the file containing the encrypted main presentation asset 220 can be downloaded through a regular (i.e., un-secure) HTTP session. Because the main presentation asset 220 is encrypted and the non-encrypted file header 230 only contains the name of the CEK 227 and not the CEK 227 itself, even if an unauthorized person intercepts the file 230 in transit, the person would not be able to decrypt and play the main presentation asset 220. Although the file 230 can be transferred via a secure session, because the size of the file 230 may be relatively large, the delay associated with transferring such a relatively-large file in a secure session may be undesired. In contrast to the file 230 containing the main presentation asset 220, the CEK 227 is sent via secure session to the portable digital content device 110. Because the size of the CEK 227 is relatively small, the delays associated with secure transfer of the CEK 227 should not be that noticeable to the user.

As shown in Figure 3, in this embodiment, the memory 120 of the portable digital content device 110 contains a public area 300 and a hidden (or "private") area 310. Although the public and hidden areas 300, 310 are shown as different partitions of a single memory 120, it should be noted that two separate memories can be used - one serving as the public area, and the other serving as the hidden area. The terms "area" and "partition" may be used interchangeably herein. The public area 300 is "public" in the sense that a file system of a host device can see the contents of the public area 300, whereas the hidden area 310 is "hidden" in the sense that a file system of a host device cannot see the contents of the hidden area 310. Instead, circuitry 130 (e.g., a controller) in the portable digital content device 110 is needed to store data to and read data from the hidden area 310. Although any type of security system can be used to provide secure storage, it is presently preferred that the portable digital content device 110 operate in accordance with TrustedFlash™ specifications from SanDisk Corporation. Additional details of TrustedFlash™ and its use in one presently preferred portable digital content device are provided later in this document.

In this embodiment, the CEK 227 is stored in the hidden area 310 to prevent an unauthorized user from gaining access to the CEK 227 and being able to decrypt the encrypted main presentation asset 220. Since the main presentation asset 220 is encrypted and cannot be decrypted without the hidden CEK 227, the main presentation asset 220 can be stored in the public area 300. If the encrypted main presentation asset 220 is stored in the public area 200, a user will be able to see the presence of the main presentation asset 220 using a file system on a host device. However, as an extra security precaution, if the user deletes or tries to alter the main presentation asset 220 (or an asset that forms part of the complete content package, as will be described in more detail below), the portable digital content device 110 can prevent playback of the main presentation asset 220 until the main presentation asset 220 (and any associated assets) are re-downloaded. Although not shown in Figure 3, the tracked usage activity data (which will sometimes be referred to herein as an "asset activity tracking object") can be stored in either the public area 300 or hidden area 310. However, it may be desired to store the asset activity tracking object in the hidden area 310, such as when an advertiser is concerned about a user being able to tamper with an asset activity tracking object for its advertisement (e.g., to show that the advertisement was viewed even though it really was not).

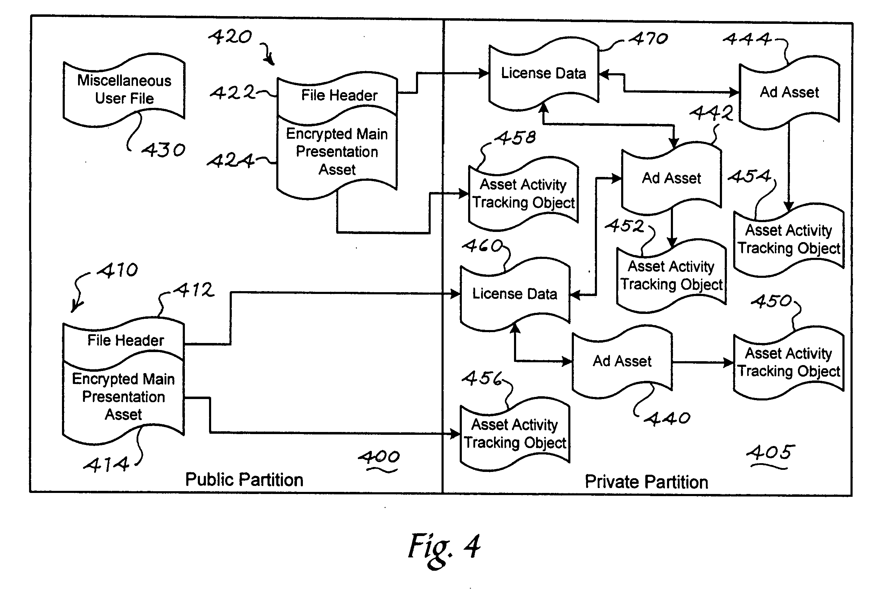

The next several drawings and paragraphs illustrate various alternatives that can be used. Figure 4 shows a memory with a public partition 400 and a private partition 405. As with the embodiment shown in Figure 3, the public partition 400 in this embodiment stores a file 410 with a file header 412 and an encrypted main presentation asset 414. The public partition 400 also contains another file 420 with a file header 422 and an encrypted main presentation asset 424, as well as a miscellaneous user file 430. Unlike the embodiment shown in Figure 3, the encrypted main presentation assets 422, 424 of both files 410, 420 do not contain "stitched-in" advertisements. Instead, the advertisements are sent separately from the encrypted main presentation assets 422, 424. Although the advertisements are not part of the files 410, 420 containing the encrypted main presentation assets 422, 424, the advertisements can come from the same server that provided the files 410, 420 and can be downloaded around the same time as the files 410, 420. Alternatively, the advertisements can come from a different server and be downloaded at a different time.

In Figure 4, the private partition 405 stores three ad assets 440, 442, 444. Although the ad assets 440, 442, 444 are stored in the private partition 405 in this embodiment, some or all of the ad asset 440, 442, 444 can be stored in the public partition 400. In this embodiment, each ad asset 440, 442, 444 is associated with a respective asset activity tracking object 440, 442, 444, which is also stored in the private partition 405. Further, in this embodiment, each main presentation asset 414, 424 is associated with a respective asset activity tracking object 456, 458, which is also stored in the private partition 405. Some or all of the asset activity tracking objects 440, 442, 444, 456, 458 can be combined into a single asset activity tracking object and can be stored in the public partition 400 instead of the private partition 405.

In this embodiment, the file header 412, 422 in each file 410, 420 points to a respective license data object 460, 470. The license data object 460, 470 contains the CEK for its associated main presentation asset 414, 424 as well as a "playlist" indicating the ad avail locations in the main presentation asset 414, 424 and which of the ad assets 440, 442, 444 to place in the ad avail locations. (In this embodiment, ad asset 442 is shared between the main presentation assets 414, 424. In other embodiments, each main presentation asset has its own unique set of ad assets.) A player (e.g., on the portable digital content device) would use the playlist to assemble the ad assets 440, 442, 444 into the appropriate ad avail locations in the main presentation assets 414, 424. In this way, the playlists in the license data objects 460, 470 would be used to assemble advertisement(s) into digital content on-the-fly, as opposed to the embodiment shown in Figure 2, where an ingestion service 200 stitched advertisements into digital content before the digital content was delivered to the portable digital content device. In this embodiment, the playlist in each license data object 460, 470 is static, in that the same ad assets are played each time the main presentation asset is played. As will be discussed in detail below, a portable digital content device can be equipped with an ad decision system, which can serve up ad assets in a dynamic and flexible manner. The license data object can also contain digital rights management (DRM) rules (e.g., restrictions on copying, the number of times the asset may be played, etc.). If the asset already has its own set of DRM rules, the portable digital content device can contain functionality to determine how to handle conflicts between the two sets of rules.

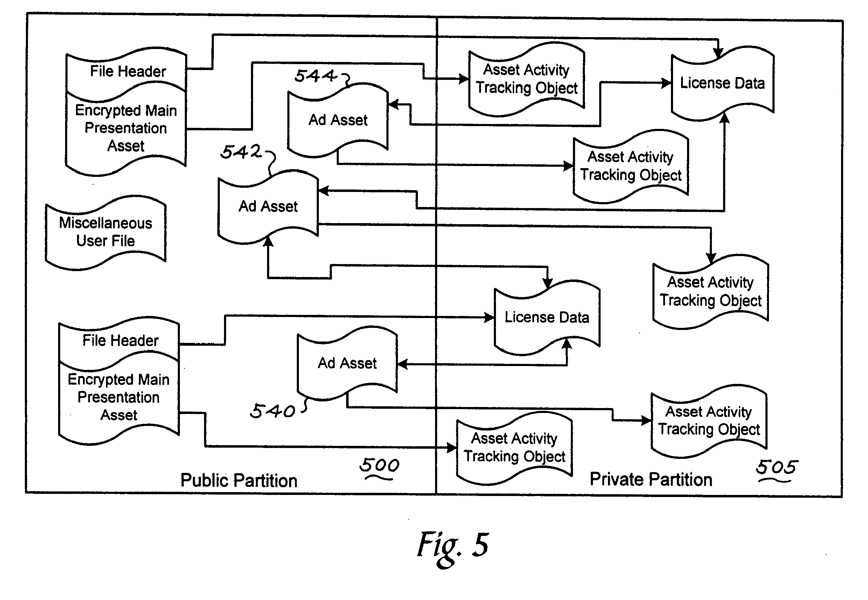

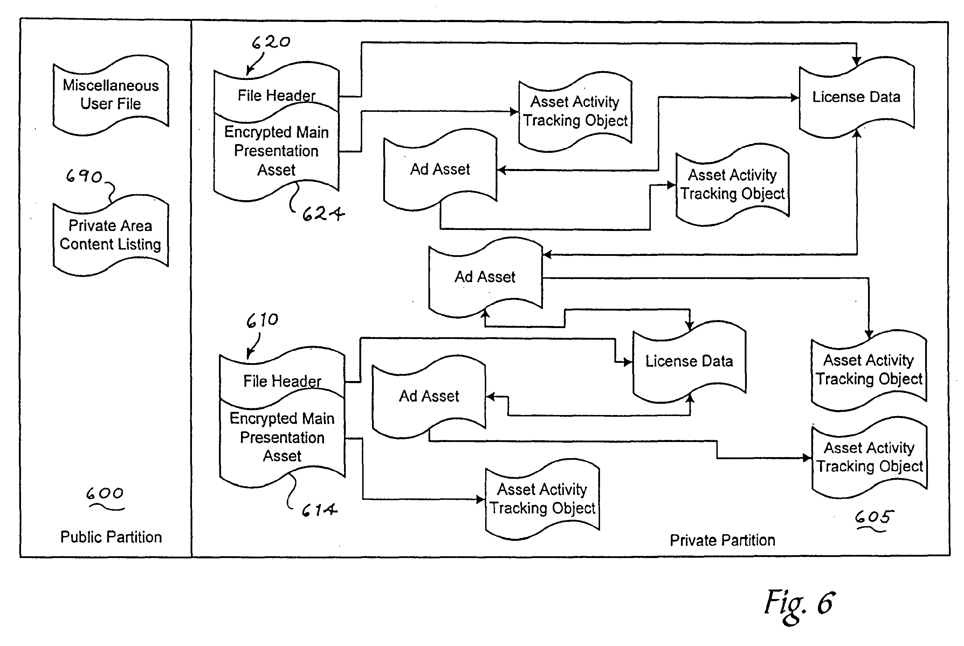

Figures 5 and 6 illustrate alternative locations of the various assets described in Figure 4. In the alternative shown in Figure 5, the ad assets 540, 542, 544 are stored in the public partition 500 instead of the private partition 505. Since the ad assets 540, 542, 544 are in the public partition 500, they may be played without playing the associated main presentation asset. Since advertisers generally want their advertisements to viewed as often as possible, an advertiser may not object to the placement of the ad assets 540, 542, 544 in the public partition 500. However, because they are in the public partition 500, the ad assets 540, 542, 544 may be susceptible to alteration by a hacker. Accordingly, it may be desired to store the ad assets 540, 542, 544 in an encrypted form instead of "in the clear." In the alternative shown in Figure 6, the files 610, 620 containing the encrypted main presentation assets 614, 624 are stored in the private partition 605. In this alternative, a private area content listing 690 is stored in the public partition 600, so a user will be able to know what digital content is stored in the portable digital content device. Although the main presentation assets 614, 624 are stored in the private partition and, therefore, should not be accessible to unauthorized entities, the main presentation assets 614, 624 are still stored in encrypted form in this embodiment as an extra precaution.

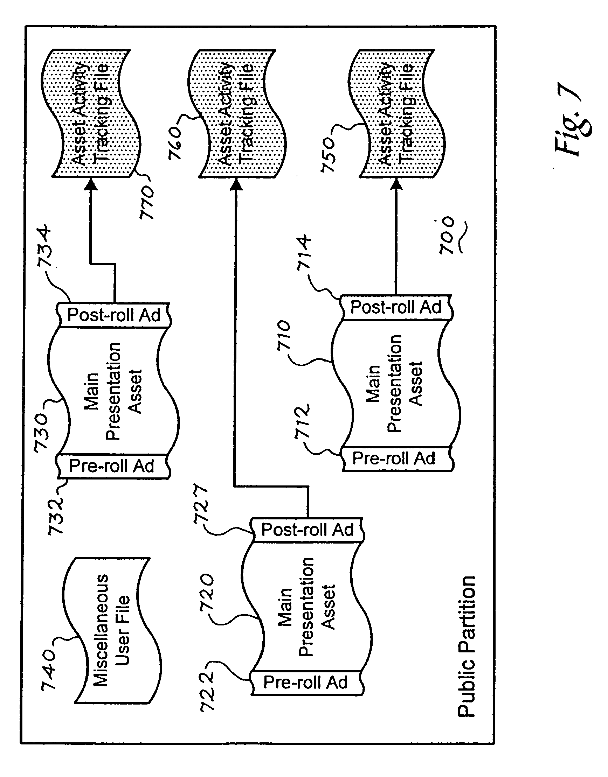

While the use of encrypted files and private partitions was used in the above embodiments, it should be noted that these features are not required in all embodiments. For example, in the embodiment shown in Figure 7, a public partition 700 in the portable digital storage device stores non-encrypted ("in the clear") main presentation assets 710, 720, 720, each with non-encrypted pre- and post-roll ads 712, 714, 722, 727, 732, 734, and a miscellaneous user file 740. (Because the pre- and post-roll ads 712, 714, 722, 72.7, 732, 734 are stitched-in to the main presentation assets 710, 720, 720, playlists are not used in this embodiment.) Each main presentation asset 710, 720, 720 is associated with a single asset activity tracking file 750, 760, 770, each respective file tracking activity of some or all of the associated ads and the main presentation asset. In this embodiment, the asset activity tracking files 750, 760, 770 are also stored in the public partition 700.

**Embodiments Relating to Offline/Disconnected Advertisement Inventory Management/Advertisement Decision System**

In the embodiments discussed in the previous section, advertisements were either "stitched-in" to digital content by an ingestion service or were assembled on-the-fly by the portable digital content device using a playlist. In those embodiments, the presentation of advertisements was static in that the same ad assets were played each time the digital content was played. However, it may be desired to serve-up ad assets in a dynamic and flexible manner according to a set of rules of an advertisement decision system. (As used herein, "set" refers to a group of one or more than one member.) The set of rules can be based on, for example, content type, popularity, demographic and/or psychographic information about a user, personal preferences of a user, location in the digital content available for an advertisement, time, history of played advertisements, to-be-played advertisements, type of host device being used for playback, etc.

Advertisement decision systems are typically thought of as complex systems used by broadcast (e.g., terrestrial, satellite, or cable) systems to schedule or inject advertisements in a broadcast. The complexity of traditional linear broadcast advertisement decision systems have recently been tempered, and online advertisement decision systems have emerged to inject ads into streaming broadcasts over the Internet. However, an online advertisement decision system requires an online playback device, which may not be convenient or enjoyable for the user. To provide more flexibility, an advertisement decision system can be implemented on a host device. In operation, a portable digital content device, such as a memory card, would be connected to and provide the host device with digital content for playback. The ad pool for use with the advertisement decision system can be stored in the host device or in the portable digital content device, and the advertisement decision system would choose advertisements from the ad pool based on the rules in the advertisement decision system in the host device. Since a host device may have somewhat sophisticated circuitry, implementation of an advertisement decision system may be viewed as an acceptable substitute for the more complex advertisement decision systems used to inject ads into streaming broadcasts over the Internet. However, having an advertisement decision system being tied to a host device means that an advertisement decision system can only be used when the portable digital content device is connected to a host device equipped with the required advertisement decision system. Accordingly, if the portable digital content device is connected to a host device with an advertisement decision system, advertisements can be delivered in a flexible an dynamic matter. However, if the portable digital content device is connected to a host device that does not have an advertisement decision system, only static advertisements will be presented (the absence of an advertisement decision system may even prevent the host from playing the digital content and/or advertisement at all).

In this embodiment, instead of tying the advertisement decision system to a host device, the advertisement decision system is tied to the portable digital content device. In this way, an advertisement decision system can be used to deliver advertisements in a flexible and dynamic matter irrespective of the type of host device and irrespective of whether the host device is equipped with an advertisement delivery system (i.e., the advertisement delivery system is host device and player "agnostic"). This makes the content on the portable digital content device much more portable (since the advertisement delivery system is tied to the portable digital content device and not to a particular host device). This is especially desirable in today's media environment where users are becoming increasingly frustrated with the inflexibility associated with closed systems.

Since advertisement decision systems are typically thought of as complex systems because of the complex set of rules used to dynamically serve-up advertisements, some may think that an advertisement decision system can only be implemented in a very complex portable digital content device. However, an advertisement decision system can be implemented in a device as simple as a memory card by optimizing the set of rules for that device, as will be described in more detail below.

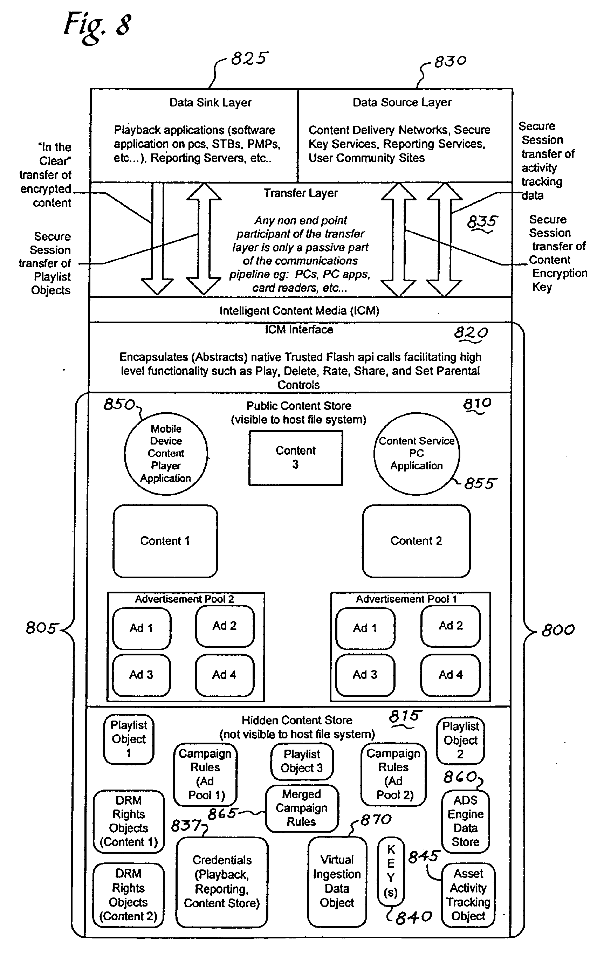

Turning again to the drawings, Figure 8 is a "strata view" of a system that will be used to illustrate an advertisement deliver system of an embodiment. As shown in Figure 8, one component of the system is a portable digital content device 800, which is referred to as "intelligent content media (ICM)" in this illustration. As with the portable digital content devices previously described, this portable digital content device 800 comprises a memory 805 having a public content store portion 810 that is visible to a host file system and a hidden content store portion 815 that is not visible to a host file system (e.g., because the portable digital content device 800 does not supply logical block access interface information to the host device).

The portable digital content device 800 in this embodiment operates in accordance with TrustedFlash™ specifications from SanDisk Corporation, and the portable digital content device 800 comprises an ICM interface layer 820 that encapsulates (abstracts) native TrustedFlash™ API calls. In general, the ICM interface layer 820 provides a high-level interface to content playback or other content-service-related applications. (Preferably, licensed playback applications have the appropriate PKI credentials to mutually authenticate in order to request playback and other services from the ICM interface 820.) In the case of a content player application, an ICM interface caplet API in the ICM interface layer 820 hides all of the DRM, advertisement campaign, and activity tracking activity that takes place when a piece of digital content is served to the user. All of this underlying activity is hidden behind what is essentially a "play" request on a specific digital content asset. Additional high-level commands include, but are not limited, to delete, rate, parental control management, and share. Since a host device merely needs to provide a high-level command, the ICM interface 820 can be considered the "mobilization enabler" for ad-supported digital content stored on the portable digital content device 800, since the content can be played on any host device - not just host devices that have been preloaded with the necessary software to provide specialized and proprietary commands. That is, the ICM interface 820 allows traditional content delivery and playback systems to be decomposed in discrete units that are more specialized than ever before. Intelligent Content Media contrasts sharply with existing passive content media such as CD, DVD, HDDVD, and Blu Ray optical media. Intelligent media allows content to be secured to the media in the way that provides unprecedented content control, rights distribution, breach management and recovery, and content mobility. Because of its availability in Flash memory packages with interfaces that are ubiquitously supported in PC, mobile, portable, and even home theatre systems, the ICM interface 820 is a highly suitable way to mobilize and provide digital content to connected and disconnected video-enabled devices of any screen size.

Returning to Figure 8, the portable digital content device 800 is in communication with a data sink layer 825 and a data source layer 830 via a transfer layer 835. The data sink layer 825 can comprise, for example, a playback application (e.g., a software application on a PC, set-top box ("STB"), portable media player ("PMP"), etc.) and a reporting server. The data source layer 830 can comprise, for example, content delivery networks (or other types of digital content source), secure key services, reporting services, and user community sites. In general, a digital content source makes digital content available to entities/agents outside of the content owner/holder's immediate containment. A digital content source can be, for example, a digital kiosk, a head-end facility of a cable or satellite service, an Internet-connected service, or a manufacturing facility that produces media or processes previously-produced media.

The transfer layer 835 includes all parts of the connection between the data sink layer 825 and the data source layer 830 and the portable digital content device 800. The transfer layer 835 can enable multiple ways for data to be transported to and from the portable digital content device 800. The transfer layer 835 can include any number of participants, wherein any non-end-point participant of the transfer layer 835 is only a passive part of the communications pipeline. These non-end-point intermediary participants can include, but are not limited to, a PC, a PC application, a memory card reader, a USB storage device, a special-purpose consumer electronics device, such as a portable media player, and even air (in a wireless transmission). The portable digital content device 800 can store credentials 837 (e.g., playback credentials, reporting credentials, and content store credentials) to authenticate an entity trying to communicate with the portable digital content device 800 via the transfer layer 835.

The transfer layer 835 can use whatever transfer methods are needed depending on the level of authentication and security required (e.g., secure transfer, "in the clear" transfer, or an interleaved hybrid of both). For example, as shown in Figure 8, encrypted content is transferred in the clear, while playlist objects, activity tracking data, and content encryption keys are transferred using a secure session. The portable digital content device 800 can also support encryption of content on-the-fly. Accordingly, the portable digital content device 800 can receive digital content "in the clear" and then encrypt the digital content for storage in the memory 805.

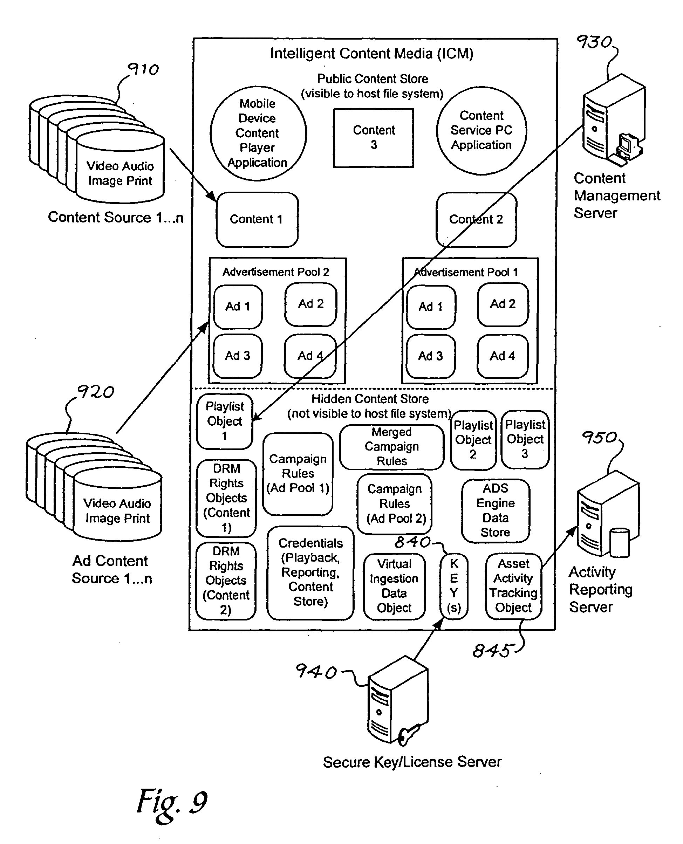

Figure 9 is an illustration of various data sinks and data sources that can be in communication with the portable digital content device 800. On the data source side, Figure 9 shows a content source 910 providing content to the portable digital content device 800, an ad content source 920 providing advertisements to the portable digital content device 800, a content management server 930 providing playlists to the portable digital content device 800, and a secure key/license server providing decryption key(s) 840 to the portable digital content device 800. On the data sink side, Figure 9 shows an activity reporting server 950 receiving an asset activity tracking object 845 from the portable digital content device 800.

Turning again to Figure 8, in this embodiment, the public content store 810 of the memory 805 comprises a mobile device content player application 850 and a content service PC application 855. These applications 850, 855 allow the portable digital content device 800 to provide the needed software to host devices that otherwise do not have the ability to play the digital content or download the digital content, respectively. The public content store 810 also comprises three pieces of digital content (content 1, content 2, and content 3). The hidden content store 815 stores DRM rights objects, which specify the rights a user has to the content (e.g., how many times the content can be played, when the content can be played, copying restrictions, etc.). A piece of content does not necessarily have to have an associated DRM rights object. For example, in the embodiment shown in Figure 8, content 1 is associated with DRM rights object 1, and content 2 is associated with DRM rights object 2 , but content 3 does not have an associated DRM rights object.

The hidden content store 815 also stores two advertisement pools (advertisement pool 1 and advertisement pool 2), each with a plurality of advertisements. As used herein, an "advertisement pool" refers to an inventory of advertisements that are logically related in some way. For example, an advertisement pool can contain advertisements that are grouped together based on one or more of the following criteria: advertising agency, content owner, user demographic/psychographic profile, and ad campaign. Depending on the relationships to content type, content holder, or other criteria, the aggregate of ad pools that hold ads that can be served with a certain piece of content can constitute the ad inventory for the content asset. In this embodiment, ad pools are independent of the content in terms of when and how the ad inventory is maintained and refreshed.

Each advertisement pool is associated with a respective set of ad campaign rules, which are used to determine a set of advertisements to play with the digital content (e.g., which ad should be served in a given ad avail as identified by playlist metadata). The set of rules can be based on any suitable criteria, including, but not limited to, time of day, history of played advertisements, advertisements to be played, advertising agency, content owner, user demographic/psychographic profile, and type of host device being used to play the digital content. The ad campaign rules can also contain information regarding maintenance of the ad pool inventories (e.g., an advertisement's "shelf life").

Circuitry in the portable digital content device 800 implements an advertisement decision system ("ADS") engine, which uses the set of ad campaign rules to determine, at run time, which set of advertisements to play with the digital content. (The ADS engine can use an ADS engine data store 860 (e.g., time) in its determination.) That is, the ADS engine is responsible for making the runtime decisions about targeting and delivery of advertisements during digital content playback. Because of the use of the ICM interface 820, the ADS engine is available for use with any host device placed in communication with the portable digital content device 800. Accordingly, the ICM interface 820 effectively mobilizes the ADS engine for deployment on any portable/mobile playback device and is compatible with time-shifted and place-shifted content services. That is, a content playback application on the host device does not need to know the ad campaign rules and logic -it just needs to make high-level requests to play content, and the ICM interface 820 takes care of the rest.

In this embodiment, advertisement pool 1 is associated with campaign rules 1, and advertisement pool 2 is associated with campaign rules 2. While a piece of content can be tied to a specific advertisement pool (e.g., content 1 can be tied to advertisement pool 1), preferably, a piece of content can be associated with multiple advertisement pools (e.g., content 1 can use advertisements from either advertisement pool 1 or advertisement pool 2). For example, advertisements from advertisement pool 1 can be advertisements sold by the owner/holder of content 1 (e.g., a television network), while the advertisements from advertisement pool 2 can be populated by the service provider (e.g., SanDisk Corporation). A piece of content can also be associated with two or more sets of campaign rules. For example, in the embodiment shown in Figure 8, content 3 is associated with a set of merged campaign rules 865, which ensures that "compatible" advertisements are presented (e.g., that advertisements from two competitors are not served next to each other, etc.). Here, the merged campaign rules 865 are merged from the campaign rules for advertisement pool 1 and the campaign rules for advertisement pool 2. The merger can be performed by the portable digital content device 800 or by an entity in the data source layer 830.

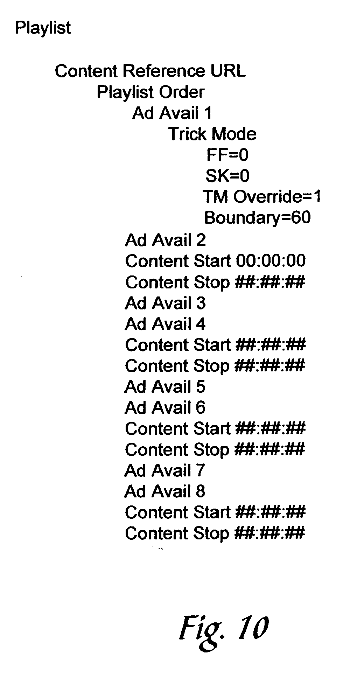

In operation, when the ICM interface 820 receives a play command for a piece of content, the ADS engine retrieves the playlist object associated with that content (e.g., playlist object 1 for content 1). The playlist is the overriding control set for one or more content assets and is processed first by the ICM play API. Different playlists can be used based on content type (e.g., paid content, rented content, free content, hybrid content, etc.). Figure 10 is an illustration of a playlist structure of an embodiment. As shown in Figure 10, the playlist contains a content reference URL and a playlist order. The playlist order identifies various locations in the digital content that are available for advertisement placements (Ad Avails 1-8), as well as the start and stop times of the digital content. The playlist also contains references to a compatible campaign rule object. Each ad avail entry can also contain "trick mode" restrictions to be enforced within an ad boundary. In this embodiment, there are four "trick mode" restrictions: fast forward ("FF"), incremental skip ("SK"), "trick mode" ("TM") disable override, and boundary. The value in the FF field indicates if and when a user can fast forward through an ad. For example, a value of 0 can mean that the user is never allowed to fast forward through an ad, a value of 1 can mean that a user is always allowed to fast forward through an ad, and a value of 2 can mean that a user is allowed to fast forward through an ad only after satisfying the "trick mode" disable override condition. The value in the SK field indicates whether or not a user is able to skip an advertisement. The value in the TM override field indicates the number of times that an advertisement must be watched within a certain time period or power cycle event. Finally, the value in the boundary field indicates the number of seconds preceding and following the advertisement where trick mode restrictions will be enforced. For example, if the boundary is 60, trick mode features will be restricted 60 second before an advertisement is played and 60 second after an advertisement is played. In this way, a user desiring to fast forward through an advertisement cannot begin the fast forward operation just prior to the start of the advertisement to get around a trick mode restriction. Preferably, the trick mode restrictions only apply to the opposite boundary of direction of travel. For example, a user should be restricted from fast forwarding 60 second before an advertisement is played but should not be restricted from rewinding during that time period.

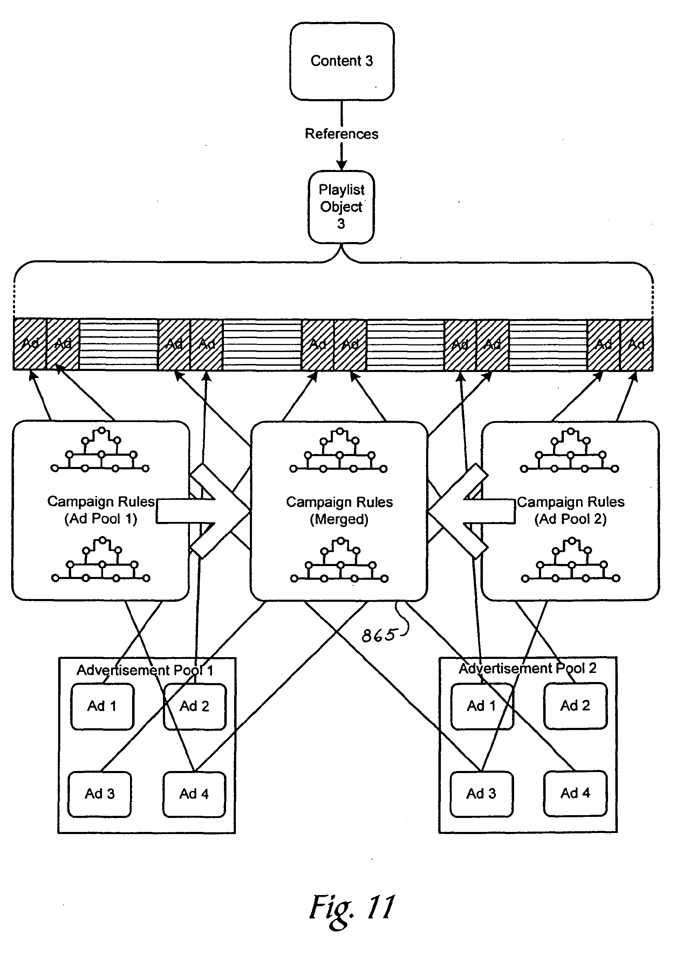

Figure 11 will be used to illustrate the operation of the ADS engine. In this example, the ICM interface 820 received a request to play content 3. Content 3 is associated with playlist object 3, which the ADS engine accesses in response to the play request. (If there was a DRM rights object associated with content 3, the DRM rights would be validated at this stage. In this way, pre-roll ads would not be played if the digital content cannot be played.) Playlist object 3 specifies the ad avails in content 3 and identifies a set of campaign rules to use. In this example, the identified set of campaign rules is the merged campaign rules 865. As shown diagrammatically in Figure 11, the merged campaign rules 865 are merged from the campaign rules for ad pool 1 and the campaign rules for ad pool 2. (This merger can be performed on the device 800 or by another entity.) As mentioned above, campaign rules are sometimes thought of as a complex set of rules that require the processing power of a PC or more powerful processor. However, in this embodiment, the campaign rules are optimized for use on a relatively small processor, such that the campaign rules can be implemented on a device as simple as a memory card with suitable circuitry without noticeable delays to an end user. Specifically, in this embodiment, the campaign rules are implemented as binary trees, which allow simple computing devices to provide an advertisement delivery system without delays that would disrupt a user's experience. In operation, the ADS engine uses the information captured in the campaign rule graphs to quickly arrive at what advertisements should be served in the various ad avails. As shown in Figure 11, advertisements from both advertisement pool 1 and advertisement pool 2 are injected into the various ad avail locations. Playback of the advertisements would then occur as per the "trick mode" restrictions specified in the playlist.

As mentioned above, although not required in this embodiment, the portable digital content device 800 can implement the asset activity tracking functionality described above. Asset activity tracking ("AAT") data is usually collected for purposes of being reported back to an activity reporting server for service revenue, quality of service, usage, content rating (passive and active on the part of the user), user interaction, and other purposes. Activity of advertisements is the foundation of an ad-supported content monetization scheme and represents revenue generation/ distribution data. Super-distribution of content also represents a revenue stream as content can be shared from ICM to ICM in an offline mode and also represents revenue generating activity that is preferably tracked and reported. This superset can include, for example, the following subsets with no distinction made on the content type: download/acquisition activity, consumption activity, offline e-commerce activity, and user interaction activity (e.g., user voting, preference, community interactions, content purchase, and other user-generated data/content). This information can be used for inventory valuation (e.g., CPM value per asset, per asset group, per user demo/psycho, per time of day, day of week, number of views, etc.).

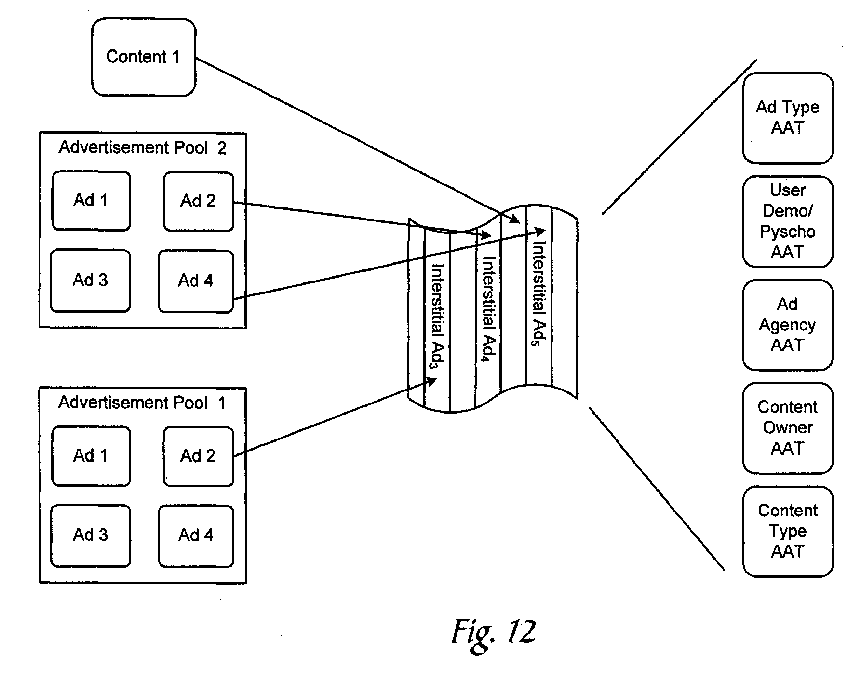

As shown in Figure 8, the portable digital content device 800 stores an asset activity tracking object 845. As discussed above, a single asset activity tracking object 845 can be used to track the activity of all of the assets on the portable digital content device 800 (as in Figure 8), or multiple asset activity tracking objects can be used for the multiple assets on the device 800. As shown in Figure 12, instead of or in addition to associating an asset activity tracking object with a specific asset, an asset activity tracking object can be associated with an ad type, a user demographic or psychographic type, an ad agency, a content owner, or a content type, for example. Instead of populating multiple asset activity tracking objects at runtime as shown in Figure 12, data can be stored in a single asset activity tracking objects with metadata that can be used to organize the AAT after the fact.

Returning to Figure 8, the portable digital content device 800 also stores a virtual ingestion object 870, which contains a record of the sources of the various assets stored on the portable digital content device 800. Virtual ingestion is an ingestion process that eliminates the need to immediately assemble all relevant content and metadata into a centralized location/service. Traditional content ingestion schemes physically collect, prepare, organize, and package content and associated metadata in groups of objects that can be published into appropriate content server infrastructures. The notion of an assembly line fits this traditional view well: materials come in, and products go out. The elements are physically collected into one centralized location/service, managed, processed, and published from that centralized location/service. Note that the schemes outlined herein support traditional content ingestion schemes. However, with intelligent content media (ICM), content ingestion can be effectively virtualized.

ICM allows content and advertisement inventory and associated metadata to be distributed in multiple locations/services until the actual point of user acquisition. This is similar to a "just in time" ("JIT") inventory management scheme where inventory is only acquired at the point of acquisition. Another appropriate analogy is online video streaming where decisions about what content and advertisement inventory to serve are made at the time of consumption. An ICM enables media acquisition to be broken into two distinct steps comprised of acquisition and then consumption. Both of these activities can take place on a connected device or on a disconnected device. Even disconnected super-distribution models are supported. What is preferably ingested at minimum is the metadata that provides the information to facilitate future content transfer/acquisition activities. This could include, but is not be limited to, data that identifies the content sources where content and advertisement assets, advertisement campaign rules, playlist metadata, and reporting services are located. These items can be located in multiple systems controlled by one to many business entities. There is no need to centrally collect, managed, and publish - the ingestion process can be virtualized, and this results in considerable savings for all participants in the content and advertisement inventory creation, packaging, and distribution eco-system. That the secure transfer of data can be facilitated by what is, from the user's perspective, a discrete, secure piece of media helps to eliminate PC and open OS application participation issues/risks in the secure transmission and authentication activities required to protect content and user's privacy. In virtual ingestion, when a user selects a piece of content to download, the following items are preferably downloaded as a virtual package: advertisements either as stand-alone entities or as groups (ad pools), and the associated ad campaign rules and playlist objects.

There are several advantages associated with this embodiment. As mentioned above, by tying the advertisement decision system to a portable digital content device instead of a host device, an advertisement decision system can be used to deliver advertisements in a flexible and dynamic matter irrespective of the type of host device and irrespective of whether the host device is equipped with an advertisement delivery system. Additionally, this embodiment brings several approaches of a standard advertisement decision system to a portable digital content device. First, standard advertisement decision systems can be thought of as closed-loop systems that are tuned to increase the cost-per-million ("CPM") value of an advertisement asset with varying degrees of feedback. This embodiment takes this model and extends it to small consumer electronic devices that operate in an offline capacity with both the advertisement inventory and the advertisement decision system operating offline. As discussed in the previous section, a security system can be used to protect both the stored assets themselves as well as tracked usage activity of those assets. Second, the advertisement decision system can be customized to support multiple business rule sets on one device. That is, the fiduciary interests of multiple stakeholders providing content supported by advertisement activity can be supported on one device. This collected activity data can be customized based on any number of factors including, but not limited to, content owner business rules, ad agency business rules, and end-user privacy criteria. Third, the advertisement decision system can be embedded in a consumer electronic device and disconnected from the network/broadcast feed and other services to operate completely independently from those services while fulfilling the obligations of the content provided to the advertiser. This system can manage and optimize the targeting of advertisements based on pre-defined business rules, which can be extended to include input from the user or to base future decisions on past user activity stored on the portable digital content device.

Additionally, by optimizing the rules used to select a set of advertisements to play with digital content, the process of determining which ad to serve at runtime can be made as efficient as possible yet allow for true ad inventory coverage for content for all ad-supported content being serviced on a portable digital content device. This allows an ad decision system to be supported on a new categories of intelligent content media (ICM) devices. Since the data for multiple ad pools for small-embedded processor routines can run quickly at runtime, a satisfactory user-playback experience is provided, and the user will not experience undue delays in video object starts as the ICM serves up the data. As discussed above, to prepare the ad decision system engine data set to be processed at runtime, the logic of one or more ad campaigns is preferably distilled into structures that allow for efficient parsing at the point of playlist processing. These structures can be one of many optimized graph structures. Combinations of fuzzy logic graph structures can also be used.

Optimizing the ad decision rules for a small-embedded processor allows a segmentation of the provisioning of the content and the rights required to do this, in contrast to just being able to perform playback with applications that do not need to know the specifics of playlist or ad campaign rules/logic. Consider the DVD eco-system as an example. There are many players available for all form factors of consumer electronics devices including PCs. Now evolve the entire approach to that enabled by Intelligent Content Media. In this case, the player need only be able to authenticate with playback credentials and agree to honor a few simple playback requirements that are passed through to the player via meta-data in the individual file itself or via other API mechanisms. Playback requirement would include features such as, but not be limited to, not allowing trick mode functions, honoring ad bounding book mark rules (e.g., cannot index to a past bookmark, cannot set a bookmark after an ad for some duration such as one minute, etc.), and other playback controls.

**Exemplary Portable Digital Content Device**

As noted above, the various embodiments described herein can be used on any suitable portable digital content device. The following paragraphs and drawings illustrate one such suitable portable digital content device. It should be noted that this portable digital content device is merely an example, and other types of portable digital content devices (include a memory card with processing circuitry) can be used to implement one or both of the main embodiments described above. Further, this portable digital content device does not necessarily need to be used with either of the main embodiments described above and can be used for other purposes.

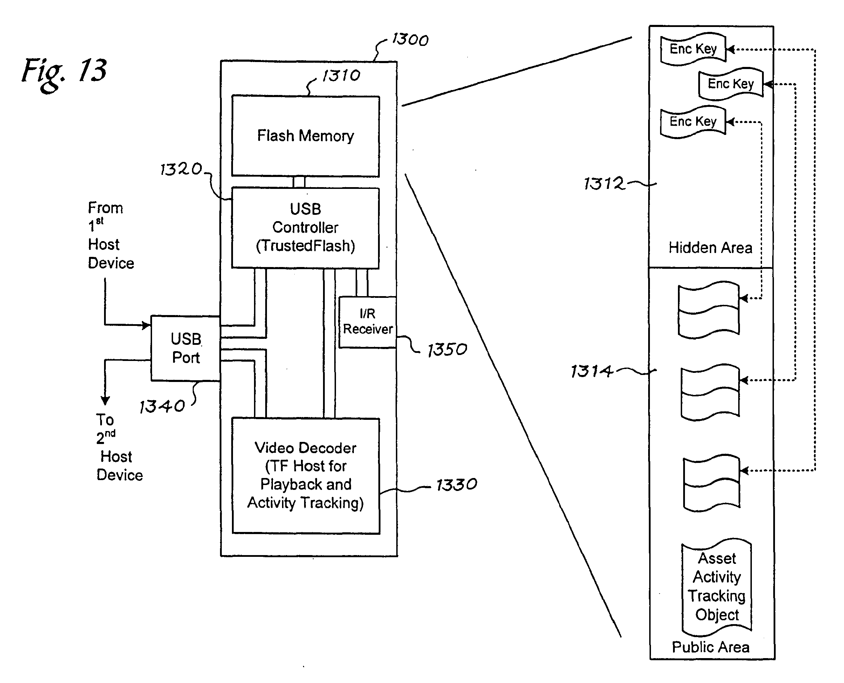

Turning now to the drawings, Figure 13 is block diagram of a portable digital content device 1300 of an embodiment. The portable digital content device 1300 comprises Flash memory 1310 which is organized into a hidden area 1312 and a public area 1314, as described above. Figure 12 shows the hidden area 1312 storing keys and the public area 1314 storing encrypted content and an asset activity tracking object. Any of the variations discussed above can be used herein. The portable digital content device 1300 also comprises a USB/TrustedFlash™ controller 1320, a video decoder 1330 (which is a TrustedFlash™ host for playback and activity tracking), a USB port 1340, and an infrared receiver 1350. In one presently preferred embodiment, the portable digital content device 1300 takes the form of a TakeTV™ device from SanDisk Corporation.

The portable digital content device 1300 in this embodiment operates with a security system specified by the TrustedFlash™ specifications from SanDisk Corporation to secure downloaded content. In general, TrustedFlash™ is designed to enhance Flash memory device capabilities with a set of security features that enables the device to protect and control the usage of stored data. The TrustedFlash™ controller 1320 is designed with flash memory cards in mind by using a form-factor-independent protocol. Two aspects of the TrustedFlash™ functionality are authentication (i.e., the ability to identify the entity requesting a service) and authorization (i.e., the ability to configure a specific set of permissions (rights) for every authenticated entity).

One of the foremost requirements of a secure Flash memory device is the ability to identify the entity requesting a device service, whether it is memory access related or not. TrustedFlash™ provides several types of authentication algorithms and allows for multiple authenticated entities to concurrently use the card. The TrustedFlash™ security system protects stored data (in the file system or TrustedFlash™ system area, and TrustedFlash™ system objects from unauthorized access by using authentication protocols. A TrustedFlash™ host application is preferably required to prove its identity through an authentication protocol when it accesses stored data or when it accesses the system database Access Control Records (ACRs). ACRs and other system objects are maintained in the hidden area 1312 on the device 1300 and are only accessible via TrustedFlash™ interactions.

The TrustedFlash™ platform supports three types of authentication protocols designed to serve different application needs:

***Password authentication***. Allows the TrustedFlash™ system to authenticate a user. A special mode of this protocol does not require a user password. Any attempt to login will be granted with no questions asked.

***Symmetric key authentication***. In addition to providing the TrustedFlash™ system with a means to identify a user through AES and DES algorithms, a variation of the symmetric key authentication protocol will allow the user to identify the proper ACR and establish a secure session.

***Asymmetric key authentication***. This mode uses RSA as the underlying cryptographic algorithm and provides a service similar to the symmetric key authentication protocol by using a Public Key Infrastructure (PKI) based key management system. Once authentication is completed, a secure session may be established.

The TrustedFlash™ system allows for configuring a specific set of permissions (rights) for every authenticated entity. Every command that is received by the controller 1320 is preferably associated with a currently-authenticated entity, and the service request is validated against the registered rights for that entity. The controller 1320 will grant the request and execute the command only if the service is permitted for the requesting entity.

A memory partition is a contiguous range of Logical Block Addresses (LBA). The TrustedFlash™ system enables the division of the Flash memory 1310 into several partitions. The portable digital content device 1300 in this embodiment only has one public FAT32 file system partition (the public area 1314) and a system area partition (the hidden area 1313). The TrustedFlash™ authorization system provides enforcement of read and write access permission to individual partitions. Flash memory devices can be used as mass storage devices, and other mass storage device types allow data to be stored in files that are organized by a file structure that is managed by the host system. TrustedFlash™ devices follow this same storage method. However, TrustedFlash™ devices do not control the file system or the objects that are stored there. Individual objects/files may be encrypted with specific content keys in order to provide file level protection, and the key is stored in a Content Encryption Key (CEK) in the System Area. The TrustedFlash™ authorization system provides enforcement of read and write access rights to a file's Content Encryption Key (CEK). If the CEK cannot be accessed using the TrustedFlash™ API, the content will not be able to be decrypted. This protects data through prevention of data usage rather than data access. As discussed above, this mechanism is used to control the ability to playback stored digital content.

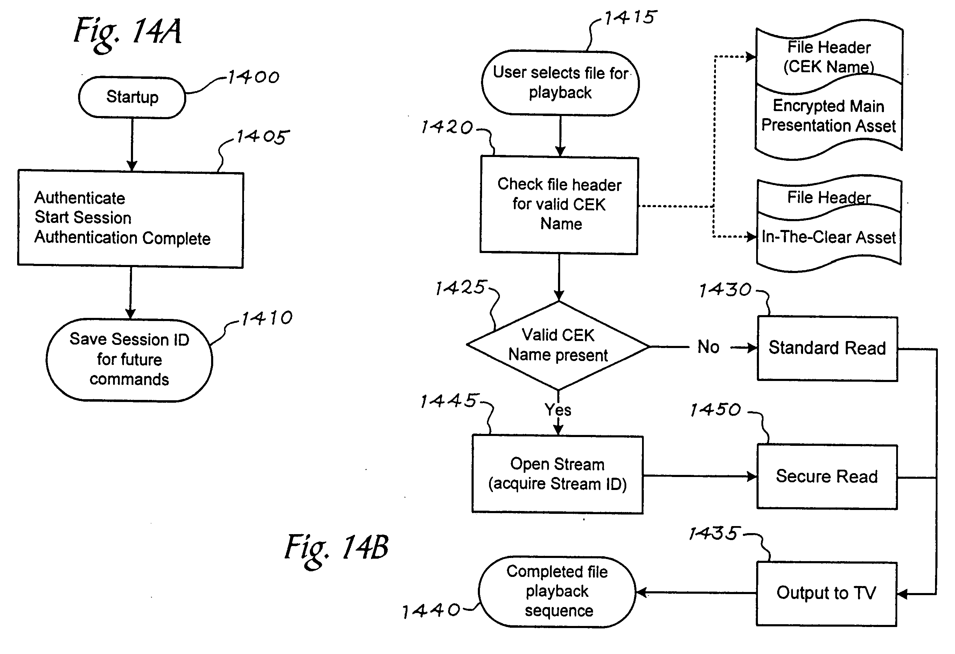

Figures 14A and 14B are flowcharts of steps used by the portable digital content device 1300 during a playback operation. Turning first to Figure 14A, at startup (act 1400), the video decoder 1330 authenticates to the TrustedFlash™ controller 1320 using a symmetric scheme (act 1405). The session is started, and authentication is complete. The Session ID is then saved for future commands (act 1410). Turning next to Figure 14B, a user selects a file for playback (act 1415). As will be discussed in more detail below, in this embodiment, a user uses a remote control in communication with the infrared receiver 1350 to select the file. In other embodiments, the file can be selected via a user input element on the device 1300 or on another device. In response to the file selection, the controller 1320 checks the file header of the file for a valid CEK name (act 1420). As illustrated in Figure 14B, if the file is an encrypted main presentation asset, it will have a file header with a CEK name. If, instead, the file is an in-the-clear asset, the file header will not have a CEK name. The controller 1320 then determines if a valid CEK name is present (act 1425). If a valid CEK name is not present, the controller 1320 will perform a standard read operation (act 1430) and stream the encrypted contents of the file to the video decoder 1330, which will decode the contents and provide an output to a host device (e.g., a TV) (act 1435). The file playback sequence is now complete (act 1440). If the a valid CEK name is present, the controller 1320 will perform a secure read operation (act 1435), decrypt the contents, and stream the decrypted contents to the video decoder 1330, which will decode the output and provide the output to the host device (act 1435).

Further information about TrustedFlash™ can be found in U.S. patent application serial numbers 11/314,411; 11/557,028; 11/322,812; and 11/322,766, which are hereby incorporated by reference. The use of TrustedFlash™ protocols and other implementation details should not be read into the claims unless explicitly recited therein.

As mentioned above, in this embodiment, the device 1300 acts as a digital multimedia player, with the video decoder 1330 serving as a multimedia processor that cooperates with the controller 1320 in real time to create a video stream. The device 1300, thus, operates in two modes of operation: one mode to download digital content into the memory 1310 from a first host device (e.g., a PC), and another mode to playback digital content on a second host device (e.g., a TV). Accordingly, the controller 1320 serves both as a USB controller to communicate with a host processor via the USB port 1340 and the video decoder 1330, which is a multimedia processor that converts digital data into a video stream that goes out to a TV or other host device via the USB port 1340. To support TrustedFlash™, the controller 1320 preferably comprises at least two keys.

Since the controller 1320 is used in both modes of operations, it may be preferred to provide a multiplexer, such as a 2p4T switch, between the controller 1320 and the video decoder 1330. When the 2p4T switch senses the voltage indicating that the USB port 1340 is connected to a host computer, the switch can place the USB port 1340 in communication with the host computer, where the device 1300 acts as a USB client. In this mode of operation, a first set of keys in the controller 1320 is utilized, and access to the data made by the external host is preferably enabled only if the first set of keys is used. When access is enabled, the data can be downloaded and stored into the Flash memory 1310. The stored data is then encrypted according to the second set of keys that is to be used later when the video decoder 1330 is used.

The video decoder 1330 processes digital data from the controller 1320 to generate streaming video, which is sent to the USB port 1340 leading to a host TV. However, in order to enable the decryption of the secured data, the video decoder 1330 preferably uses the second set of keys. In the event that the second set of keys in indeed used, the data can be decrypted, decoded into a multimedia stream, and sent to the USB port 1340. When the switch senses voltage from the second host device, the switch connects the USB port 1340 to the video decoder 1330. When the device 1300 is not connected to any host, the switch is turned off, and the position of the switch is not important. It should be clear that a similar method can be used with removable non-volatile storage protocols ("RNVSP") other that USB (e.g., SD protocols, MMC protocols, etc.). It should also be clear that a similar method can be used with any combination of components that have a common RNVSP.

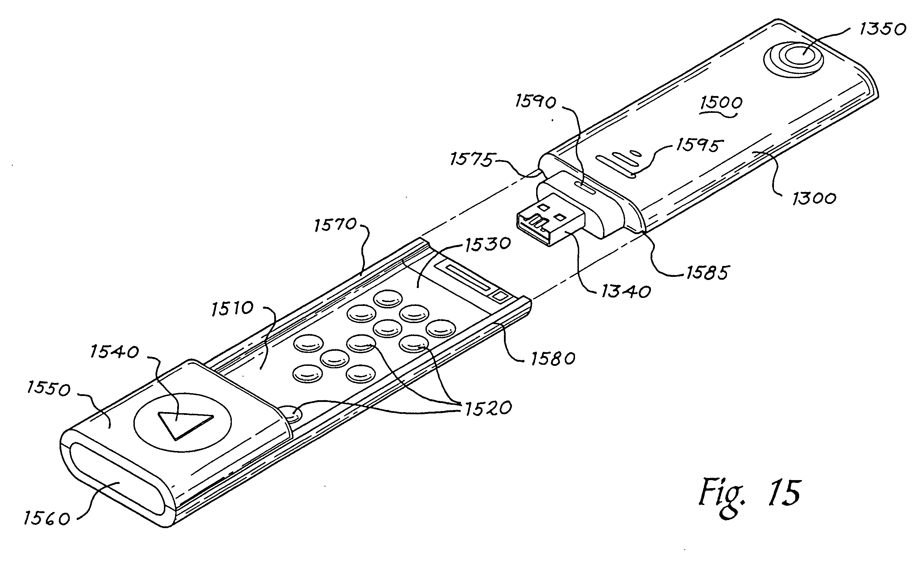

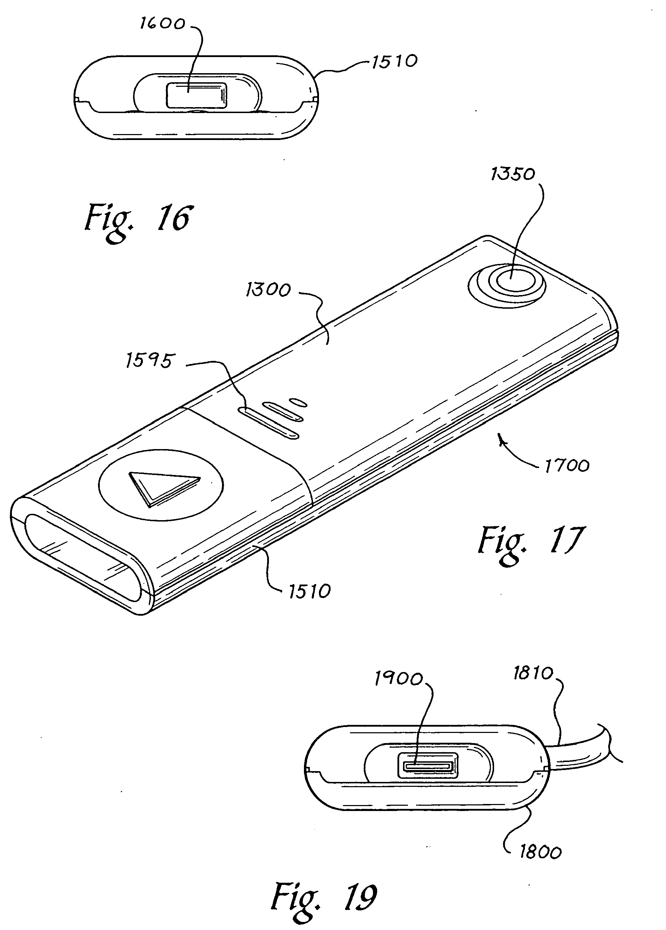

Turning again to the drawings, Figure 15 is an illustration of the portable digital content device 1300 (the "main module") and a remote control 1510 for use with the portable digital content device 1300. Figure 15 shows the USB port 1340 and the infrared receiver 1350, with the other components being contained within the housing 1500 of the device 1300. The remote control 1510 comprises a plurality of user input elements (here, buttons) 1520 on a recessed portion 1530 and a play button 1540 on the outer portion of the housing 1550. The housing 1550 supports circuitry including an infrared transmitted adjacent to an infrared window 1560 that wirelessly transmits a command in response to selection of one of the user input elements. As shown in Figure 16, the remote control 1510 comprises an opening 1600 sized to accept the USB port 1340 (or other electrical connector).

The housing 1500 of the main module 1300 and the remote control 1510 are configured such that the main module 1300 and the remote control 1520 can slide into one another to form a portable assembly 1700, such that the "cover" of the assembly 1700 is the remote control 1510, as shown in Figure 17. Specifically, the remote control 1510 comprises a plurality of rails 1570, 1580, and the main module 1300 comprises a plurality of grooves 1575, 1586 that slide along one another as the main module 1300 and the remote control 1510 slide into one another. As shown in Figure 17, in the completed assembly 1700, the play button 1540 is exposed, but the other user input elements 1520 are not. When the main module 1300 and the remote control 1510 completely slide into one another to form the assembly 1700, the USB port 1340 fits into the opening 1600. In this embodiment, the play button 1540 is positioned over the opening 1600, and, when the USB port 1340 slides into the opening 1600, the USB port's 1340 presence in the opening 1600 prevents the play button 1540 from being depressed.

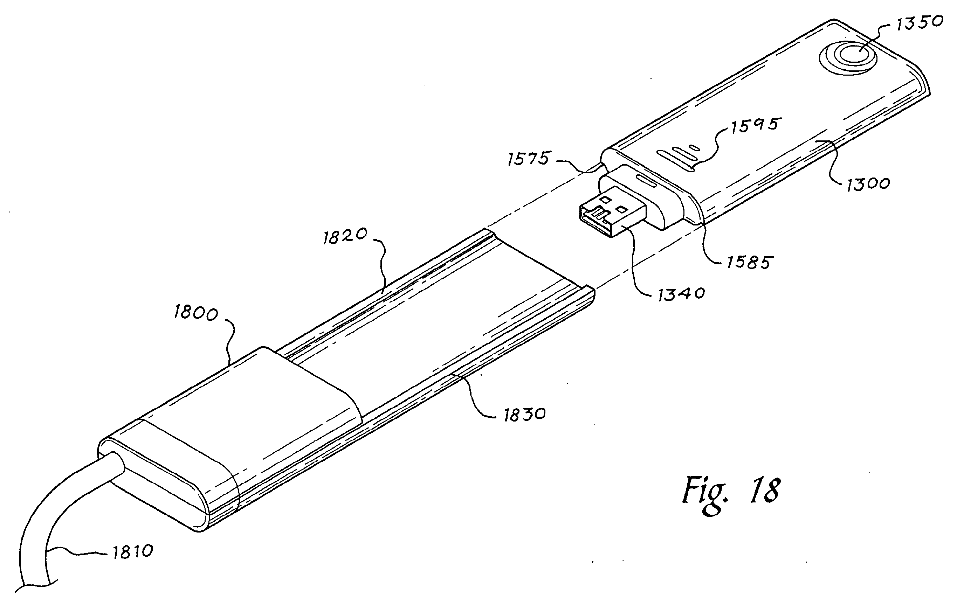

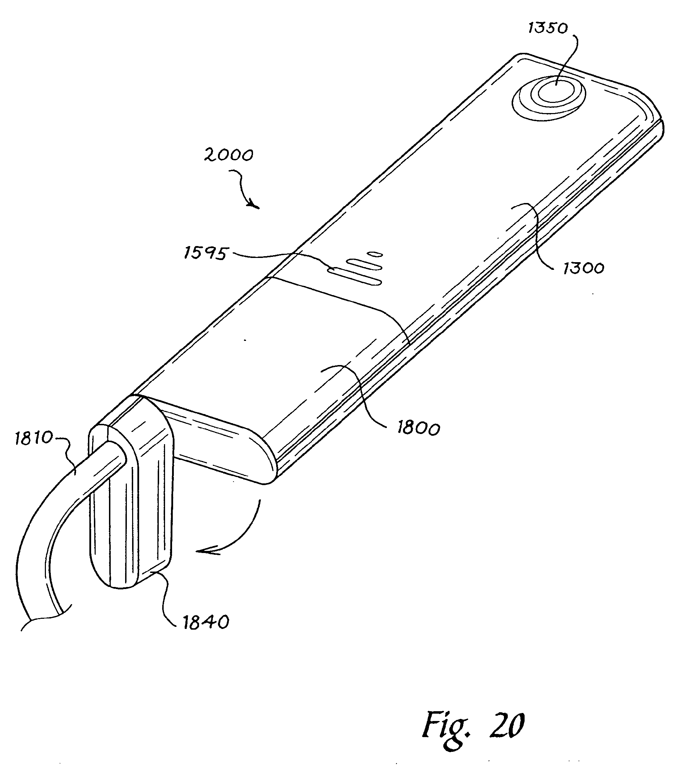

The assembly 1700 forms a convenient way for a user to transport both the main module 1300 and the remote control 1510 to a host device for playing digital content. The main module 1300 comprises a protrusion 1590 that fits into a recess (not shown) in the remote control 1510 to retain the main module 1300 and remote control 1510 together (although the protrusion can be located on the remote control 1510 instead of the main module 1300). To play digital content stored in the main module 1300 on a host device, the user first decouples the main module 1300 from the remote control 1510 (finger grips 1595 on the mail module 1300 assist in this process). In this embodiment, the host device takes the form of a TV and connects to a cradle 1800 via a cable 1810 (see Figure 18). As shown in Figure 19, the cradle 1800 comprises an electrical connector 1900 that mates with the USB port 1340 of the main module 1300. Like the remote control 1510, the cradle 1800 comprises a plurality of rails 1820, 1830 that slide along the plurality of grooves 1575, 1586 on the main module 1300. When the main module 1300 completely slides into the cradle 1800, an assembly 2000 is formed (see Figure 20). As shown in Figure 20, the cradle 1800 comprises a movable leg 1840 that is rotatable about the axis upon which the cable 1810 enters the cradle 1800. The movable leg 1840 can be positioned to support the cradle 1800 on a surface (e.g., an entertainment center supported a TV).

Further information about a suitable portable digital content device and embodiments that can be used therewith can be found in the following patent documents, which are hereby incorporated by reference: 11/716,648; 11/495,627; 11/710,925; 11/747,928; 11/747,929; 11/710,988; 11/710,908; 11/562,430; 11/550,813; 29/264,743; 29/265,841; 29/265,847; and 60/771,794. Details from these documents should not be read into the claims unless explicitly recited therein.

It is intended that the foregoing detailed description be understood as an illustration of selected forms that the invention can take and not as a definition of the invention. It is only the following claims, including all equivalents, that are intended to define the scope of this invention. Also, some of the following claims may state that a component is operative to perform a certain function or configured for a certain task. It should be noted that these are not restrictive limitations. It should also be noted that the acts recited in the claims can be performed in any order - not necessarily in the order in which they are recited. Additionally, any aspect of any of the preferred embodiments described herein can be used alone or in combination with one another.

## Claims

1. A method for tracking usage activity using a portable digital content device, the method comprising:
with a portable digital content device:
storing digital content and an advertisement received from a first host device;
playing the digital content and the advertisement on a second host device; and
tracking usage activity of the advertisement.

2. A method according to Claim 1, further comprising reporting the usage activity to an entity external to the portable digital content device.

3. A method according to Claim 1 or 2, wherein the usage activity is stored in a hidden area of a memory in the portable digital content device.

4. A method according to Claim 1, 2 or 3, wherein the digital content and the advertisement are part of a single file.

5. A method according to Claim 1, 2 or 3, wherein the digital content and the advertisement are separate files, and wherein the portable digital content device assembles the digital content and the advertisement according to data in a playlist associated with digital content.

6. A portable digital content device comprising:
a memory; and
circuitry operative to:
receive a request from a player in a host device in communication with the portable digital content device to play digital content stored in the memory;
using a set of rules stored in the memory, determine a set of advertisements from a plurality of advertisements stored in the memory to play with the digital content; and
play the digital content with the determined set of advertisements.

7. A portable digital content device according to Claim 6, wherein the set of rules comprises a plurality of rules organized as a binary tree.

8. A portable digital content device according to Claim 6 or 7, wherein the set of rules is a result of a merger of first and second set of rules.

9. A portable digital content device according to Claim 6, 7 or 8, wherein the portable digital content device comprise a memory card, and wherein the set of rules is optimized for use on a processor of the memory card.

10. A portable digital content device according to any of Claims 6 to 9, wherein the set of rules comprises a result based on at least one of the following: location in the digital content available for an advertisement, time, demographic information about a user, history of played advertisements, to-be-played advertisements, and type of host device used for playback.
